# EUROPEAN PATENT APPLICATION

(11) **EP 4 808 272 A1**
(43) Date of publication of application: **16.09.2026**
(21) Application number: 23957996.4
(22) Date of filing: 09.11.2023
(51) Int. Cl.: H04W 76/28, H04W 88/08

(54) **WIRELESS COMMUNICATION METHOD, TERMINAL DEVICE, ACCESS NETWORK DEVICE, AND CORE NETWORK DEVICE**

(71) Applicant: GUANGDONG OPPO MOBILE TELECOMMUNICATIONS CORP., LTD., Dongguan, Guangdong 523860 (CN)
(72) Inventor: GUO, Boren, Dongguan, Guangdong 523860 (CN); LU, Fei, Dongguan, Guangdong 523860 (CN)
(74) Representative: RGTH
(86) International application number: PCT/CN2023/130787
(87) International publication number: WO 2025/097388

(57) **Abstract**

Provided are a wireless communication method, a terminal device, an access network device, and a core network device. The method comprises: an access network device sending an association identifier of first information to a target device, wherein the association identifier is used for associating first information transmitted by means of a first link with first information transmitted by means of a second link, and/or the association identifier is used for associating the first information with other information, and the other information is information which is transmitted during a signaling process associated with the first information, other than the first information. In the embodiments of the present application, an association identifier of first information is introduced, and the association identifier can associate first information transmitted in a first link with first information transmitted in a second link, that is to say, a plurality of stages in which the first information is transmitted are associated, which is helpful for a communication device that participates in the transmission of the first information to recognize that the plurality of stages belong to a transmission process of the first information, thereby increasing a success rate of the transmission of the first information.

## Description

### TECHNICAL FIELD

The present disclosure relates to the technical field of communications, and more specifically, to a wireless communication method, a terminal device, an access network device, and a core network device.

### BACKGROUND

In some scenarios, a terminal device performs communication with an access network device via a first link, and the access network device performs communication with a core network device via a second link, but the first link and second link cannot be simultaneously available. In this case, when the terminal device needs to transmit first information to the core network device via the access network device, the first information may be transmitted by the terminal device to the access network device via the first link; however, since the second link is unavailable, the access network device needs to store the first information and wait until the second link is available before transmitting the first information to the core network device via the second link. Accordingly, when the core network device needs to transmit the first information to the terminal device via the access network device, the first information may be transmitted by the core network device to the access network device via the second link; however, since the first link is unavailable, the access network device needs to store the first information and wait until the first link is available before transmitting the first information to the terminal device via the first link.

Since the first link and the second link are not simultaneously available, the transmission process of the first information is divided into multiple stages for transmission. This leads to communication devices (e.g., the terminal device, the access network device and the core network device introduced above) participated in transmission of the first information being unable to recognize that the multiple stages belong to a single procedure of transmitting the first information. In this case, the communication devices participated in transmission of the first information have inconsistent understandings, resulting in a transmission failure of the first information.

### SUMMARY

The present disclosure provides a wireless communication method, a terminal device, an access network device, and a core network device. Various aspects involved in the present disclosure are introduced below.

In a first aspect, a wireless communication method is provided, and includes: transmitting, by an access network device, an association identifier of first information to a target device, the association identifier being used to associate the first information transmitted via a first link with the first information transmitted via a second link; where the target device includes a terminal device and/or a core network device.

In a second aspect, a wireless communication method is provided, and includes: receiving, by a target device, an association identifier of first information transmitted by an access network device, the association identifier being used to associate the first information transmitted via a first link with the first information transmitted via a second link; where the target device includes a terminal device and/or a core network device.

In a third aspect, a wireless communication method is provided, and includes: transmitting, by a terminal device, a first request to an access network device, the first request being used to request resuming a signaling procedure associated with first information, where the first information is transmitted via a first link and a second link, where suspending of the signaling procedure associated with the first information is triggered based on unavailability of the first link, or suspending of the signaling procedure associated with the first information is triggered based on unavailability of the second link.

In a fourth aspect, a wireless communication method is provided, and includes: receiving, by an access network device, a first request transmitted by a terminal device, the first request being used to request resuming a signaling procedure associated with first information, where the first information is transmitted via a first link and a second link, where suspending of the signaling procedure associated with the first information is triggered based on unavailability of the first link, or suspending of the signaling procedure associated with the first information is triggered based on unavailability of the second link.

In a fifth aspect, a wireless communication method is provided, and includes: transmitting, by an access network device, a paging message in response to a first link being available, the paging message being used to page a terminal device that receives first information, where the first information is transmitted via the first link and a second link, the first link being a link for communications between the access network device and the terminal device, and the second link being a link for communications between the access network device and a core network device.

In a sixth aspect, a wireless communication method is provided, and includes: receiving, by a terminal device, a paging message transmitted by an access network device in response to a first link being available, where the paging message is used to page the terminal device to receive first information, where the first information is transmitted via the first link and a second link, the first link being a link for communications between the access network device and the terminal device, and the second link being a link for communications between the access network device and a core network device.

In a seventh aspect, a wireless communication method is provided, and includes: releasing, by an access network device, a suspended signaling procedure, where the signaling procedure is associated with first information, and the first information is transmitted via a first link and a second link, the first link being for communications between the access network device and a terminal device, and the second link being for communications between the access network device and a core network device; where suspending of the signaling procedure is triggered based on unavailability of the first link or triggered based on unavailability of the second link.

In an eighth aspect, a wireless communication method is provided, and includes: releasing, by a terminal device, a suspended signaling procedure, where the signaling procedure is associated with first information, and the first information is transmitted via a first link and a second link, the first link being for communications between an access network device and the terminal device, and the second link being for communications between the access network device and a core network device; where suspending of the signaling procedure is triggered based on unavailability of the first link or triggered based on unavailability of the second link being unavailable.

In a ninth aspect, a wireless communication method is provided, and includes: releasing, by a core network device, a suspended signaling procedure, where the signaling procedure is associated with first information, and the first information is transmitted via a first link and a second link, the first link being for communications between an access network device and a terminal device, and the second link being for communications between the access network device and the core network device; where suspending of the signaling procedure is triggered based on unavailability of the first link or triggered based on unavailability of the second link.

In a tenth aspect, an access network device is provided, and includes: a transmitting unit, configured to transmit an association identifier of first information to a target device, where the first information is transmitted via a first link and a second link, and the association identifier is used to associate the first information transmitted via the first link with the first information transmitted via the second link; where the target device includes a terminal device and/or a core network device.

In an eleventh aspect, a communication device is provided, where the communication device is a target device, and includes: a receiving unit, configured to receive an association identifier of first information transmitted by an access network device, where the association identifier is used to associate the first information transmitted via a first link with the first information transmitted via a second link; where the target device includes a terminal device and/or a core network device.

In a twelfth aspect, a terminal device is provided, and incudes: a transmitting unit, configured to transmit a first request to an access network device, the first request being used to request resuming a signaling procedure associated with first information, where the first information is transmitted via a first link and a second link, where suspending of the signaling procedure associated with the first information is triggered based on unavailability of the first link or suspending of the signaling procedure associated with the first information is triggered based on unavailability of the second link.

In a thirteenth aspect, an access network device is provided, and includes: a receiving unit, configured to receive a first request transmitted by a terminal device, the first request being used to request resuming a signaling procedure associated with first information, where the first information is transmitted via a first link and a second link, where suspending of the signaling procedure associated with the first information is triggered based on unavailability of the first link or suspending of the signaling procedure associated with the first information is triggered based on unavailability of the second link.

In a fourteenth aspect, an access network device is provided, and includes: a transmitting unit, configured to transmit a paging message in response to a first link being available, the paging message being used to page a terminal device that receives first information, where the first information is transmitted via the first link and a second link, the first link being a link for communications between the access network device and the terminal device, and the second link being a link for communications between the access network device and a core network device.

In a fifteenth aspect, a terminal device is provided, and includes: a receiving unit, configured to: receive a paging message transmitted by an access network device in response to a first link being available, the paging message being used to page the terminal device to receive first information, where the first information is transmitted via the first link and a second link, where the first link is a link for communications between the access network device and the terminal device, and the second link is a link for communications between the access network device and a core network device.

In a sixteenth aspect, an access network device is provided, and includes: a processing unit, configured to release a suspended signaling procedure, where the signaling procedure is associated with first information, and the first information is transmitted via a first link and a second link, the first link being for communications between the access network device and a terminal device, and the second link being for communications between the access network device and a core network device; where suspending of the signaling procedure is triggered based on unavailability of the first link or triggered based on unavailability of the second link.

In a seventeenth aspect, a terminal device is provided, and includes: a processing unit, configured to release a suspended signaling procedure, where the signaling procedure is associated with first information, and the first information is transmitted via a first link and a second link, the first link being for communications between an access network device and the terminal device, and the second link being for communications between the access network device and a core network device; where suspending of the signaling procedure is triggered based on unavailability of the first link or triggered based on unavailability of the second link.

In an eighteenth aspect, a core network device is provided, and includes: a processing unit, configured to release a suspended signaling procedure, where the signaling procedure is associated with first information, and the first information is transmitted via a first link and a second link, the first link being for communications between an access network device and a terminal device, and the second link being for communications between the access network device and the core network device; where suspending of the signaling procedure is triggered based on unavailability of the first link or triggered based on unavailability of the second link.

In a nineteenth aspect, a terminal device is provided, and includes: a processor, a memory and a communication interface, where the memory is configured to store one or more computer programs, and the processor is configured to invoke the computer program(s) in the memory to enable the terminal device to perform some or all of the operations in the methods according to the above various aspects.

In a twentieth aspect, an access network device is provided, and includes: a processor, a memory and a transceiver, where the memory is configured to store one or more computer programs, and the processor is configured to invoke the computer program(s) in the memory to enable the access network device to perform some or all of the operations in the methods according to the above various aspects.

In a twenty-first aspect, the embodiments of the present disclosure provide a communication system, which includes the above-mentioned terminal device and/or network device (e.g., a core network device and/or an access network device). In another possible design, the system may further include other devices that interact with the terminal device or the network device in the solutions provided by the embodiments of the present disclosure.

In a twenty-second aspect, the embodiments of the present disclosure provide a computer-readable storage medium. The computer-readable storage medium stores a computer program that enables a communication device (for example, a terminal device or a network device (e.g., a core network device and/or an access network device)) to perform some or all operations of the methods according to the above various aspects.

In a twenty-third aspect, the embodiments of the present disclosure provide a computer program product. The computer program product includes a non-transitory computer-readable storage medium storing a computer program, which is operable to enable a communication device (for example, a terminal device or a network device (e.g., a core network device and/or an access network device)) to perform some or all operations of the methods according to the above various aspects. In some implementations, the computer program product may be a software installation package.

In a twenty-fourth aspect, the embodiments of the present disclosure provide a chip. The chip includes a memory and a processor, where the processor can invoke a computer program from the memory and execute the computer program to perform some or all operations described in the methods according to the above various aspects.

In the embodiments of the present disclosure, the association identifier of the first information is introduced, the association identifier can associate the first information transmitted on the first link with the first information transmitted on the second link. That is, multiple stages of transmitting the first information are associated, which helps the communication devices participated in transmission of the first information to identify that the multiple stages belong to a transmission procedure of the first information, to improve the success rate of transmission of the first information.

### BRIEF DESCRIPTION OF DRAWINGS

FIG. 1A to FIG. 1C are system architecture diagrams of communication systems to which embodiments of the present disclosure are applicable.
FIG. 2 is a schematic diagram illustrating a communication process when a satellite operates in a normal mode.
FIG. 3 is a schematic diagram illustrating a communication process when a satellite operates in a store-and-forward mode.
FIG. 4(a) and FIG. 4(b) respectively illustrate transition processes between two registration management (RM) states on a terminal device and an access and mobility management function (AMF).
FIG. 5(a) and FIG. 5(b) respectively illustrate transition processes between a connection management (CM) idle state and a CM connected state.
FIG. 6 is a schematic diagram illustrating a registration procedure to which the embodiments of the present disclosure are applicable.
FIG. 7 is a schematic diagram illustrating a first link, a second link, and first information in an embodiment of the present disclosure.
FIG. 8 is a schematic diagram illustrating a transmission manner of an association identifier of the first information in an embodiment of the present disclosure.
FIG. 9 is a schematic flowchart illustrating a transmission process of an association identifier of the first information in an embodiment of the present disclosure.
FIG. 10 is a schematic flowchart illustrating a transmission process of an association identifier of the first information in another embodiment of the present disclosure.
FIG. 11 is a schematic flowchart illustrating a wireless communication method according to an embodiment of the present disclosure.
FIG. 12 is a schematic diagram illustrating a wireless communication method according to an embodiment of the present disclosure.
FIG. 13 is a schematic diagram illustrating a wireless communication method according to an embodiment of the present disclosure.
FIG. 14 is a schematic diagram illustrating a wireless communication method in an embodiment of the present disclosure.
FIG. 15 is a schematic diagram illustrating a wireless communication method in an embodiment of the present disclosure.
FIG. 16 is a flowchart illustrating a wireless communication method according to an embodiment of the present disclosure.
FIG. 17 is a flowchart illustrating a wireless communication method according to an embodiment of the present disclosure.
FIG. 18 is a flowchart illustrating a wireless communication method according to an embodiment of the present disclosure.
FIG. 19 is a schematic diagram of an access network device according to an embodiment of the present disclosure.
FIG. 20 is a schematic diagram of a communication device according to an embodiment of the present disclosure.
FIG. 21 is a schematic diagram of a terminal device according to an embodiment of the present disclosure.
FIG. 22 is a schematic diagram of an access network device according to an embodiment of the present disclosure.
FIG. 23 is a schematic diagram of an access network device according to an embodiment of the present disclosure.
FIG. 24 is a schematic diagram of a terminal device according to an embodiment of the present disclosure.
FIG. 25 is a schematic diagram of an access network device according to an embodiment of the present disclosure.
FIG. 26 is a schematic diagram of a terminal device according to an embodiment of the present disclosure.
FIG. 27 is a schematic diagram of a core network device according to an embodiment of the present disclosure.
FIG. 28 is a schematic diagram of an access network device according to an embodiment of the present disclosure.
FIG. 29 is a schematic diagram of a communication device according to an embodiment of the present disclosure.
FIG. 30 is a schematic structural diagram of a communication apparatus according to an embodiment of the present disclosure.

### DETAILED EMBODIMENTS

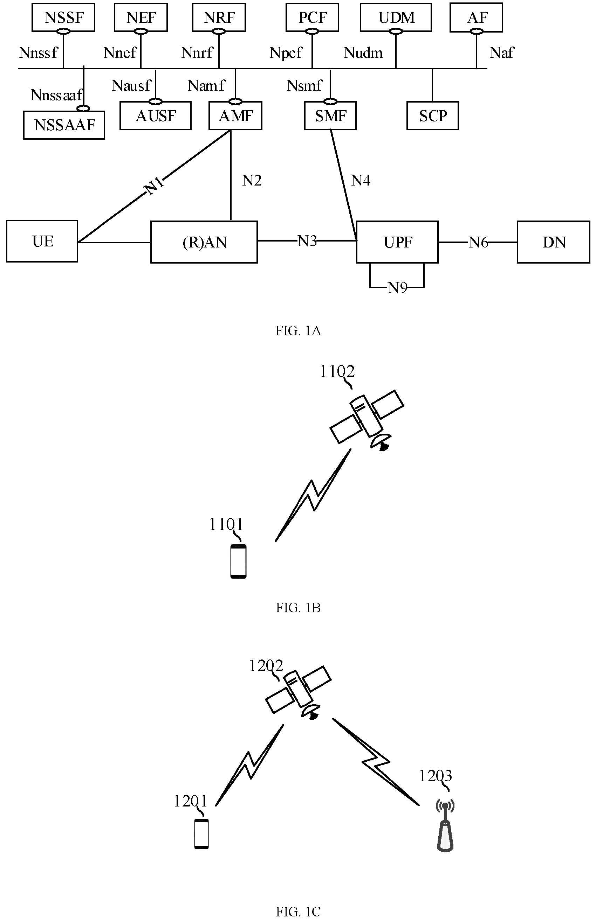

The technical solutions in the present disclosure are described below with reference to the drawings. For ease of understanding, a schematic diagram of communication system architecture according to the embodiments of the present disclosure is first introduced below with reference to FIG. 1. FIG. 1 is the schematic diagram of the communication system architecture to which the embodiments of the present disclosure are applicable. The network architecture may include a terminal device, an access network (AN) element, and a core network element.

It should be understood that the technical solutions of the embodiments of the present disclosure may be applied to various communication systems, such as: a fifth-generation (5G) system or a new radio (NR), a long-term evolution (LTE) system, an LTE frequency division duplex (FDD) system, and an LTE time division duplex (TDD) system. The technical solutions provided by the present disclosure may also be applied to future communication systems, such as a sixth-generation mobile communication system, and a satellite communication system.

In the embodiments of the present disclosure, the terminal device may also be referred to as user equipment (UE), an access terminal, a user unit, a user station, a mobile site, a mobile station (MS), a mobile terminal (MT), a remote station, a remote terminal, a mobile device, a user terminal, a terminal, a wireless core network element, a user agent or a user apparatus. In the embodiments of the present disclosure, the terminal device may refer to a device that provides voice and/or data connectivity to a user, and may be used to connect people, objects and machines, such as a handheld device or in-vehicle device with a wireless connection function. In the embodiments of the present disclosure, the terminal device may be a mobile phone, a tablet computer (Pad), a laptop computer, a handheld computer, a mobile Internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, etc. Optionally, the terminal device may be configured to act as a base station. For example, the terminal device may act as a scheduling entity that provides sidelink signals between terminal devices in vehicle-to-everything (V2X) or device-to-device (D2D) communication. For example, a cellular phone and a car may communicate with each other by using sidelink signals. A cellular phone and a smart home device may communicate with each other without relaying communication signals via a base station.

The access network element may be an access network device. The access network device may be an access device via which the terminal wirelessly accesses the network architecture, and is mainly responsible for wireless resource management, quality of service (QoS) management, data compression and encryption on an air interface side. The access network device may also be referred to as a radio access network (RAN) device, for example, the access network device may be a base station. The base station may broadly cover the following various names, or may be replaced with the following names, such as: a NodeB, an evolved NodeB (eNB), a next generation NodeB (gNB), a relay station, an access point (AP), a transmitting and receiving point (TRP), a transmitting point (TP), a master eNB (MeNB), a secondary eNB (SeNB), a multi-standard radio (MSR) node, a home base station, a network controller, an access node, a wireless node, an access point (AP), a transmission node, a transceiver node, a base band unit (BBU), a remote radio unit (RRU), an active antenna unit (AAU), a remote radio head (RRH), a central unit (CU), a distributed unit (DU), and a positioning node. The base station may be a macro base station, a micro base station, a relay node, a donor node, or similar entities, or a combination thereof. The base station may also refer to a communication module, a modem or a chip configured to be set in the aforementioned devices or apparatuses. The base station may also be a mobile switching center; a device that performs functions of the base station in a D2D communication, a V2X communication and a machine-to-machine (M2M) communication; a network-side device in a 6G network; and a device that performs functions of the base station in a future communication system; etc. The base station may support networks with the same or different access technologies. The specific technologies used by the network device and the specific device forms of the access network device are not limited in the embodiments of the present disclosure.

The base station may be immobile or mobile. For example, a helicopter or a drone may be configured to act as a mobile base station, and one or more cells may move based on the location of the mobile base station. In other examples, the helicopter or the drone may be configured to act as a device communicating with another base station.

In some deployments, the access network device in the embodiments of the present disclosure may refer to a CU or a DU, or the access network device includes a CU and a DU. The gNB may also include an AAU.

The types of the core network element may include a user plane function (UPF) network element, an access and mobility management function (AMF) network element, a session management function (SMF) network element, a policy control function (PCF) network element, an application function (AF), a data network (DN), a network slice selection function (NSSF), an authentication server function (AUSF), a unified data management (UDM) function, a network exposure function (NEF), a network repository function (NRF), and a network slice-specific authentication and authorization function (NSSAAF). Among these, the UPF network element is mainly responsible for the transmission of user data, and other network elements may be referred to as control plane function elements, which are mainly responsible for authentication, authorization, registration management, session management, mobility management and policy control to ensure reliable and stable transmission of user data.

The UPF network element may be configured to forward and receive data of a terminal. For example, the UPF network element may receive service data from a data network and transmit the service data to a terminal via an access network device. The UPF network element may also receive the user data from the terminal via the access network device and forward the user data to the data network. The transmission resources allocated and scheduled by the UPF network element for the terminal are managed and controlled by the SMF network element. The bearer between the terminal and the UPF network element may include a user plane connection between the UPF network element and the access network device, and a channel established between the access network device and the terminal. The user plane connection is a QoS flow that may establish a data transmission between the UPF network element and the access network device.

The AMF network element may be configured to manage access to the core network by the terminal, for example, UE location update, registration on a network, access control, UE mobility management, and UE attachment/detachment. When providing a service for a session of the terminal, the AMF network element may also provide storage resources of the control plane for the session, so as to store a session identifier and an SMF network element identifier associated with the session identifier.

The SMF network element may be configured to select a user plane network element for a terminal, redirect a user plane network element for a terminal, allocate an internet protocol (IP) address for a terminal, establish a bearer (or session) between a terminal and an UPF network element, modify or a release a session, and perform QoS control.

The PCF network element is configured to provide policies, such as a QoS policy and a slice selection policy, to the AMF and the SMF network elements.

The AF network element is configured to interact with a 3GPP core network element to support routing of application-influenced data and to access the network exposure function, and interact with the PCF network element to perform the policy control, among other functions.

The DN may provide data services to users through an IP multi-media service (IMS) network or the internet. The DN may contain various application servers (AS) offering different application services, such as operator services, access to Internet or third-party services, where an AS may implement the function of an AF.

The NSSF is configured to select a network slice and supports functions such as selecting a network slice instance set served for a terminal device; determining allowed network slice selection assistance information (NSSAI), and determining the mapping to subscribed single-network slice selection assistance information (S-NSSAI) when needed; determining configured NSSAI, and determining the mapping to subscribed S-NSSAI when needed; and determining an AMF set that may be used for querying a terminal device, or determining a list of candidate AMFs based on a configuration.

The AUSF is configured to receive a request from the AMF for authenticating a terminal, retrieve a key from the UDM, and then forwards the acquired key to the AMF for authentication processing.

The UDM includes functions such as generation and storage of the user subscription data and management of authentication data, and supports interaction with an external third-party server.

The NEF is configured for capability exposure, that is, the capability of a network may be output to an external network based on the NEF. An external untrusted application may access the internal data of a core network through the NEF, so as to ensure security of the network. The NEF may provide functions such as QoS capability exposure for external applications, event subscription, and AF request distribution.

The NRF is configured for registration, management and state monitoring of the core network element, so as to implement automated management of the core network element. When the core network element is initiated, it must register on the NRF before providing services. Registration information may include, for example, a type, an address and a service list of the core network element.

In addition, some networks (e.g., 5G network) have introduced a network data analytics function (NWDAF) into the core network. Based on the NWDAF, data may be collected from various core network elements and network management systems for big data statistics or analytics, or intelligent data analytics, so that the analytics or predictive data from the network side is obtained, which assists various network elements in more effectively controlling access to the terminal device based on data analysis results.

In some communication systems (e.g., 5G system), the core network element may also be referred to as a network function (NF).

Various network elements illustrated in FIG. 1 may be network components in hardware devices, or software functions running on dedicated hardware, or virtualization functions instanced on a platform (e.g., a cloud platform). It should be noted that the network architecture illustrated in the above-mentioned figure is merely an example illustrating the network elements included in the entire network architecture. In the embodiments of the present disclosure, there is no limitation on network elements included in the entire network architecture.

Those skilled in the art would understand that the network architecture illustrated in FIG. 1 does not constitute a limitation on the network architecture. In a specific implementation, the network architecture may include more or fewer network elements than those illustrated in the above-mentioned figure, or combine some network elements, and so on. It should be understood that AN or RAN is represented as (R)AN in FIG. 1.

In some scenarios, the network device and the terminal device may be deployed on land, including indoors or outdoors, handheld or in-vehicle; the network device and the terminal device may also be deployed on water; and the network device and the terminal device may also be deployed on an airplane, a balloon and a satellite in the air. The scenarios in which the network device and the terminal device are located are not limited in the embodiments of the present disclosure.

As an example but not a limitation, in the embodiments of the present disclosure, the network device may have mobile characteristic, for example, the network device may be a mobile device. In some embodiments of the present disclosure, the network device may be a satellite or a balloon station. For example, the satellite may be a low Earth orbit (LEO) satellite, a medium Earth orbit (MEO) satellite, a geostationary Earth orbit (GEO) satellite, a high elliptical orbit (HEO) satellite, etc. In some embodiments of the present disclosure, the network device may also be a base station deployed on land, water, or other locations.

In the embodiments of the present disclosure, the network device may provide services for a cell, and a terminal device performs communication with the network device through transmission resources (e.g., frequency-domain resources, or spectrum resources) utilized by the cell. The cell may be a cell corresponding to the network device (e.g., a base station), and the cell may belong to a macro base station or belong to a base station corresponding to a small cell. Here, the small cell here may include a metro cell, a micro cell, a pico cell, a femto cell, etc. These small cells have the characteristics of small coverage and low transmit power, and are suitable for providing high-speed data transmission services.

As an example, FIG. 1B is a schematic architecture diagram of another communication system provided by the embodiments of the present disclosure. Please refer to FIG. 1B, a terminal device 1101 and a satellite 1102 are included, where the terminal device 1101 may perform wireless communication with the satellite 1102. A network formed between the terminal device 1101 and the satellite 1102 may also be referred to as a non-terrestrial network (NTN). In the architecture of the communication system illustrated in FIG. 1B, the satellite 1102 may have the functionality of a base station, and the terminal device 1101 may communicate with the satellite 1102 directly. Under the system architecture, the satellite 1102 may be referred to as a network device. In some embodiments of the present disclosure, the communication system may include multiple network devices 1102, and coverage of each network device 1102 may include terminal devices of other quantities, which are not limited in the embodiments of the present disclosure.

As an example, FIG. 1C is a schematic architecture diagram of another communication system provided by the embodiments of the present disclosure. Referring to FIG. 1C, a terminal device 1201, a satellite 1202 and a base station 1203 are included, where the terminal device 1201 may perform wireless communication with the satellite 1202, and the satellite 1202 may perform communication with the base station 1203. A network formed by the terminal device 1201, the satellite 1202 and the base station 1203 may also be referred to as an NTN. In the architecture of the communication system illustrated in FIG. 1C, the satellite 1202 may not have the functionality of a base station, and communications between the terminal device 1201 and the base station 1203 requires a relay via the satellite 1202. Under this type of system architecture, the base station 1203 may be referred to as a network device. In some embodiments of the present disclosure, the communication system may include multiple network devices 1203, and coverage of each network device 1203 may include terminal devices of other quantities, which are not limited in the embodiments of the present disclosure.

It should be noted that FIG. 1A to FIG. 1C merely illustrate the systems to which the present disclosure is applicable by way of examples. Certainly, the methods shown in the embodiments of the present disclosure may also be applicable to other systems, such as a 5G communication system, and an LTE communication system, which are not specifically limited in the embodiments of the present disclosure.

In some embodiments of the present disclosure, the wireless communication systems illustrated in FIG. 1A to FIG. 1C may further include other network entities such as a mobility management entity (MME), an access and mobility management function (AMF), and so on, which are not limited in the embodiments of the present disclosure.

It should be understood that devices having the communication function in the network/system in the embodiments of the present disclosure may be referred to as communication devices. Taking the communication system 100 illustrated in FIG. 1A as an example, the communication devices may include the network device 110 and the terminal device 120 having the communication function, and the network device 110 and the terminal device 120 may be the specific devices mentioned above, which will not repeated here. The communication devices may further include other devices in the communication system 100, such as a network controller, a mobility management entity and other network entities, which are not limited in the embodiments of the present disclosure.

It should be understood that the term "indicate/indicated/indicating/indication" mentioned in the embodiments of the present disclosure may be a direct indication, may also be an indirect indication, or may mean that there is an association relationship. For example, A indicating B may mean that A directly indicates B, for example, B may be obtained by A; alternatively, A indicating B may mean that A indirectly indicates B, for example, A indicates C, and B may be obtained by C; alternatively, A indicating B may mean that there is an association relationship between A and B.

In the description of the embodiments of the present disclosure, the term "correspond/corresponding/correspondence" may mean that there is a direct or indirect correspondence between two elements, may also mean that there is an associated relationship between the two elements, or may also mean a relationship of indicating and being indicated or a relationship of configuring and being configured, etc.

The term "configuration" in the embodiments of the present disclosure may include being configured through at least one of: a system message, radio resource control (RRC) signaling, or a media access control control element (MAC CE).

In some embodiments of the present disclosure, the "pre-defined" or "preset" may be implemented by pre-saving corresponding codes, tables, or other manners that may be used to indicate related information in devices (e.g., including a terminal device and a network device), and a specific implementation manner thereof is not limited in the present disclosure. For example, the pre-defined may refer to what is defined in a protocol.

In some embodiments of the present disclosure, the "protocol" may refer to a standard protocol in the communication field. For example, the "protocol" may include an LTE protocol, an NR protocol, and a related protocol used in a future communication system, which is not limited in present disclosure.

To facilitate understanding, some knowledge of the related art involved in the embodiments of the present disclosure is first introduced. The following related art, as optionally solutions, may be arbitrarily combined with the technical solutions of the embodiments of the present disclosure, and all of such combinations fall within the protection scope of the embodiments of the present disclosure. The embodiments of the present disclosure include at least part of the following content.

### Non-terrestrial Network (NTN)

At present, the 3rd generation partnership project (3GPP) is conducting research on the NTN technology. The NTN typically employs the manner of satellite communication to provide communication services to terrestrial users. Compared to the terrestrial cellular communication, the satellite communication has many unique advantages.

First, the satellite communication is not constrained by the user's geographical location. For example, a typical terrestrial communication network cannot cover areas such as oceans, mountains, and deserts where the network device cannot be deployed. Alternatively, the terrestrial communication network may not cover certain sparsely populated areas. However, for the satellite communication, since a single satellite may cover a large area of the ground and may orbit the Earth, theoretically, every corner of the Earth may be covered by the satellite communication network.

Second, the satellite communication has significant social value. The satellite communication may reach remote mountainous areas, impoverished and underdeveloped countries or regions at a relatively low cost, enabling people in these areas to enjoy advanced voice communication and mobile Internet technologies. From this perspective, the satellite communication may help narrow the digital divide with developed regions and promote the development of these regions.

Third, the satellite communication has the advantage of long distance, and the increase in communication distance does not significantly increase the cost of communications.

Finally, the satellite communication has a high stability and is unaffected by natural disasters.

Communication satellite are categorized into low Earth orbit (LEO) satellite, medium Earth orbit (MEO) satellite, geostationary earth orbit (GEO) satellite, and high elliptical orbit (HEO) satellite according to different orbital altitudes. The current research focuses on the LEO satellite and the GEO satellite.

The altitude of an LEO satellite typically ranges from 500 km to 1500 km. Accordingly, the orbital period of the LEO satellite is approximately 1.5 hours to 2 hours. For the LEO satellite, the signal propagation delay for single-hop communication between users is generally less than 20 ms. The maximum satellite visible time of the LEO satellite is approximately 20 minutes. The LEO satellite has advantages such as a short signal propagation distance, low link loss, and low requirements for the transmit power of the terminal device of the user.

The orbital altitude of a GEO satellite is 35,786 km. The orbital period of the GEO satellite around the Earth is 24 hours. For the GEO satellite, the signal propagation delay for single-hop communication between users is generally about 250 ms.

To ensure the coverage of a satellite and enhance the system capacity of the entire satellite communication system, the satellite typically employs multiple beams to cover ground areas. Therefore, a single satellite may form dozens or even hundreds of beams to cover the ground areas. A single beam of the satellite may cover a ground area with a diameter ranging from tens to hundreds of kilometers.

At present, NTN systems include NR-NTN systems and Internet of things (IoT)-NTN systems.

### Satellite Network Architecture

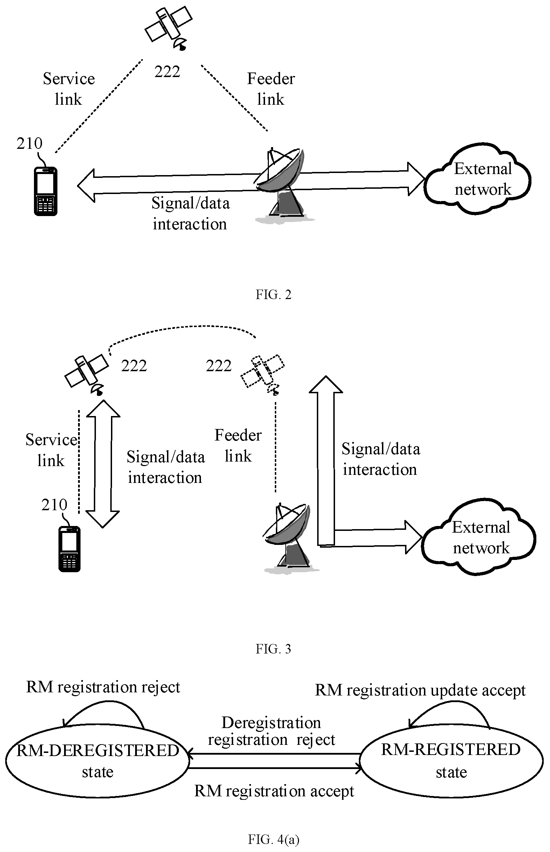

Two types of satellites are currently considered in the 3GPP, one type is the transparent payload satellite and another type is the store-and-forward (SF) satellite. The network architecture including the store-and-forward satellite is introduced below with reference to FIG. 2 and FIG. 3.

In some scenarios, the store-and-forward mode refers to that, in an NTN network, a service link for serving the user by the satellite and a feeder link between the satellite and the ground gateway are not simultaneously available, and thus, the satellite needs to store the transmitted data when one link is connected and forward the transmitted data when the another link is connected. This approach may reduce the deployment cost of ground gateways and improves deployment flexibility, that is, the need to deploy the ground gateways to areas close to the user is eliminated. Such a store-and-forward mode is suitable for services that are not highly sensitive to the latency requirements, or in other words, such a store-and-forward mode is suitable for services that are not highly stringent to the latency requirements.

For ease of understanding, the communication processes of the satellite operating in the normal mode and the store-and-forward mode are introduced respectively with reference to FIG. 2 and FIG. 3.

As illustrated in FIG. 2, the satellite operates in the normal mode, and when the terminal device performs the signaling or data interaction with the ground receiving station via the satellite, the service link and the feeder link are required to be simultaneously available, therefore, the end-to-end connection between the terminal device and the ground receiving station via the satellite is continuous.

As illustrated in FIG. 3, the satellite operates in the store-and-forward mode, where the service link and the feeder link cannot be simultaneously available, and the signaling/data interaction between the terminal device and the ground receiving station via the satellite may include operation 1 and operation 2.

In operation 1, the signaling/data interaction is performed between the terminal device and the satellite via the service link, and in this case, no feeder link connection is established between the satellite and the ground receiving station, and the satellite would first stores the data to be transmitted. Subsequently, as the satellite moves gradually away from the terminal device, the satellite disconnects the service link with the terminal device.

In operation 2, when the satellite flies over the ground receiving station, the satellite establishes a connection with the ground receiving station, which enables communications between the satellite and the ground receiving station via the feeder link. In this case, the satellite may transmit the stored data to be transmitted to the ground receiving station via the feeder link.

It should be noted that the process of transmitting the data to be transmitted from the terminal device to the ground receiving station via the satellite is introduced above by combining operation 1 and operation 2. Correspondingly, the process of transmitting the data to be transmitted from the ground receiving station to the terminal device via the satellite is similar to the above, which will not be repeated here for brevity.

### Registration Management (RM)

The RM state of a terminal device has two types: an RM-DEREGISTERED state (also referred to as "deregistered state") and an RM-REGISTERED state. When the terminal device in the RM-DEREGISTERED state, the terminal device is not registered on a network, and the UE context stored in an AMF does not contain a valid location or routing information, therefore, the terminal device is unreachable by the AMF. However, some of the UE context related to authentication is stored in both the terminal device and the AMF, which helps avoid performing the authentication procedure during every registration procedure, thereby simplifying the registration procedure of the terminal device. When the terminal device in the RM-REGISTERED state, the terminal device is registered on the network and the terminal device may perform normal service communication through the network. In this case, the AMF stores a UE mobility management context.

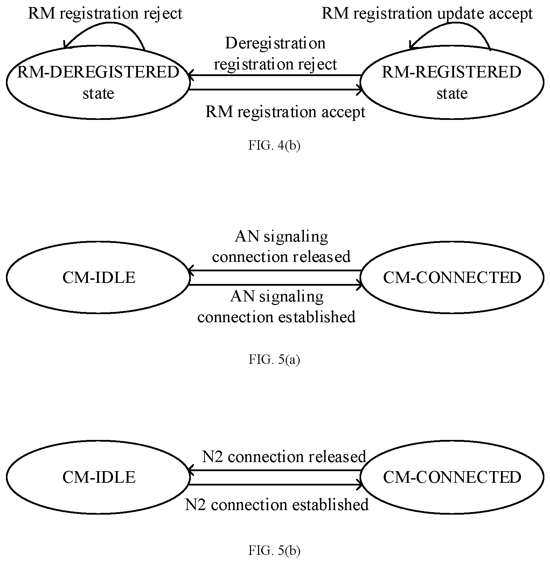

The transition process between the two RM states on the terminal device and the AMF is described below with reference to FIG. 4(a) and FIG. 4(b), respectively.

As illustrated in FIG. 4(a), for the terminal device, if the RM registration is rejected (registration reject), the terminal device is in the RM-DEREGISTERED state. Conversely, if the RM registration is accepted (registration accept), the terminal device is transited from the RM deregistered state to the RM registered state.

For the terminal device, if the RM registration update is accepted (registration reject), the terminal device is in the RM registered state.

For the terminal device, if the deregistration registration is rejected (deregistration registration reject), the terminal device is in the RM deregistered state.

As illustrated in FIG. 4(b), for the AMF, if the RM registration is rejected (registration reject), the terminal device is in the RM deregistered state. Conversely, if the RM registration is accepted (registration accept), the terminal device is transited from the RM deregistered state to the RM registered state.

For the AMF, if the RM registration update is received (registration reject), the terminal device is in the RM registered state.

For the AMF, if the deregistration registration is rejected (deregistration registration reject), the terminal device is in the RM deregistered state.

### Connection Management (CM)

Connection management includes the functions of establishing and releasing an N1 non-access stratum (NAS) signaling connection between the terminal device and the AMF. The N1 NAS signaling connection is used to enable a direct signaling interaction between the terminal device and the core network device. It includes a connection between the terminal device and the access network device, and an N2 connection between the access network device and the AMF associated with the terminal device.

The connection state between the terminal device and the AMF includes: a CM-IDLE state and a CM-CONNECTED state. When the terminal device is in the CM-IDLE, there is no N1 connection, AN signaling connection, N2 connection, or N3 connection corresponding to the terminal device. When the terminal device is in both the CM-IDLE and the RM-REGISTERED states, the terminal device needs to initiate a service request procedure to respond a paging, unless the terminal device is in a mode in which the connection is only initiated by the terminal device (i.e., 5G mobile initiated connection only (MICO) mode). Alternatively, when the terminal device has uplink signaling or uplink data required to be transmitted, the terminal device initiates the service request procedure. When the RM state of the terminal device in the AMF is RM-REGISTERED, information required for initiating communications with the terminal device is stored in the AMF, and the AMF may determine the above information of the terminal device through a 5G globally unique temporary identifier (5G-GUTI).

In some scenarios, the terminal device will provide AN parameters such as a 5G-short -temporary mobile subscriber identity (5G-S-TMSI) during the AN signaling connection establishment process. As illustrated in FIG. 5(a), whenever an AN signaling connection is established, the terminal device may be transited from the CM-IDLE state to the CM-CONNECTED state. For example, if a connection for an initial NAS signaling (e.g., a registration request, a service request, or a deregistration request) is established, the transition from the CM-IDLE state to the CM-CONNECTED state may be triggered. Conversely, whenever an AN signaling connection is released (e.g., initial NAS information), the transition from the CM-CONNECTED state to the CM-IDLE state may be triggered.

In some scenarios, when the state of the terminal device in the AMF is the CM-IDLE and the RM-REGISTRATION, and the AMF has signaling or data required to be transmitted to the terminal device, the AMF needs to initiate a paging to the terminal device and receive a response to perform the service request procedure initiated by the network. As illustrated in FIG. 5(b), when an N2 connection of the terminal device is established, the state of the terminal device in the AMF is transited from the CM-IDLE state to the CM-CONNECTED state. For example, the reception of an initial N2 message transmitted via the N2 connection may trigger the transition of the state of the terminal device in the AMF from the CM-IDLE state to the CM-CONNECTED state. In some scenarios, when the terminal device is in the CM-IDLE state, the terminal device may enter the MICO mode to reduce power consumption and signaling overhead.

In some scenarios, when a terminal device is in the CM-CONNECTED state, there is an N1 NAS signaling connection between the terminal device and the AMF. This NAS signaling connection utilizes the RRC connection between the terminal device and the NG-RAN, and NG application protocol (NGAP) UE association between the AN and the AMF. When a terminal device is in the CM-CONNECTED state, the NGAP may also not be bound to any transmission network layer. Subsequently, after completing the NAS signaling process, the AMF may decide to release the NAS signaling connection with the terminal device.

In some scenarios, when the terminal device is in the CM-CONNECTED, the terminal device enters into the CM-IDLE state whenever the AN signaling connection is released. Whenever the logical NGAP signaling connection and the N3 user plane connection for this terminal device are released in the AN, the terminal device enters into the CM-IDLE state. The AMF may maintain the connection state of the terminal device to be the CM-CONNECTED until the terminal device is deregistered from the network.

In some scenarios, a terminal device in the CM-CONNECTED may also be in the RRC_INACTIVE state. In this case, the RAN would release the AN connection with the terminal device, and the terminal device operates within an area configured by the RAN; the N2 connection remains exist, and the reachability of the terminal device is managed by the RAN based on auxiliary information provided by the network side; the paging for the terminal device is managed by the RAN, and the terminal device monitors a paging that contains a network identifier (5G S-TMSI) and RAN identifier corresponding to the terminal device. The terminal device must notify the RAN when leaving the area configured by the RAN.

### Reachability of the terminal device

Reachability management is responsible for monitoring whether the terminal device is reachable and providing the network with the location of the terminal device (i.e., the access node), so that information transmitted by the network may reach the terminal device. This process is accomplished by paging the terminal device and performing location tracking for the terminal device. Location tracking includes terminal device registration area tracking (i.e., UE registration area update) and terminal device reachability tracking (i.e., UE periodic registration area update). Such functionality may be implemented by network elements in the 5GC (in the case of the CM-IDLE state) or implemented by network elements in the NG-RAN (in the case of the CM-CONNECTED state).

In some scenarios, the terminal device and the AMF negotiate the reachability characteristics of the terminal device in the CM-IDLE state during the registration process. The terminal device and the AMF negotiate the following three reachability categories of the terminal device for the CM-IDLE state: a reachability category 1 to a reachability category 3.

For the reachability category 1, this category indicates a reachability category that data is allowed to be delivered to the terminal device when the terminal device is in the CM-IDLE state.

In this reachability category, the network may know the location of the terminal device at the granularity of the tracking area list. In this reachability category, the paging procedure is applicable to this reachability category. In addition, in this reachability category, UE-originated data and UE-terminated data are applicable to both the CM-CONNECTED state and the CM-IDLE state.

For the reachability category 2, only the terminal device initiates the connected mode.

In this reachability category, the UE-originated data is applicable to both the CM-CONNECTED state and the CM-IDLE state in this category. In this reachability category, the UE-terminated data is supported only when the terminal device is in the CM-CONNECTED state.

For the reachability category 3, the terminal device is unreachable when terminal device is in an unavailable period.

In this reachability category, neither the UE-originated data nor the UE-terminated data is supported. In addition, the paging procedure is not applicable to this reachability category.

Whenever a terminal device in the RM-REGISTERED state enters into the CM-IDLE state, the terminal device starts a periodic registration timer according to a periodic registration timer assigned by the AMF during the registration procedure. The terminal device needs to perform periodic registrations after the periodic registration timer expires. In a case where the terminal device moves out of the network coverage when its periodic registration timer expires, the terminal device shall perform the registration process when returning to the coverage next time.

The AMF runs a mobile reachable timer for the terminal device. Whenever the CM state of a terminal device in the RM-REGISTERED state changes to the CM-IDLE, a timer is started with a value longer than the periodic registration timer of the terminal device. In a case where the AMF receives an elapsed time from the RAN when the RAN initiates UE context release indicating that the UE is unreachable, the AMF shall derive a value of the mobile reachable timer based on the elapsed time received from the RAN and a normal value of the mobile reachable timer. In a case where the CM state of the terminal device in the AMF is transited to the CM-CONNECTED state, the AMF stops the mobile reachable timer. In a case where the mobile reachable timer expires, the AMF determines that the terminal device is unreachable. When the mobile reachable timer expires, the AMF cannot know whether the terminal device is only temporarily unreachable, and thus the AMF would not immediately deregister the terminal device. After the mobile reachable timer expires, the AMF clears a paging proceeding indication flag and starts an implicit deregistration timer. In a case where the terminal device is transited to the CM-CONNECTED state before the timer expires, the AMF shall stop the implicit registration timer and set the performance and reliability prediction (PPF) flag. Otherwise, after the implicit registration timer expires, the AMF initiates a privacy deregistration of the terminal device.

If the terminal device indicates an unavailable period duration, the AMF would consider that the terminal device is unreachable and would not trigger a paging process (e.g., clearing the PPF) until the terminal device registers again for a normal service (e.g., setting the PPF). Once an event causing the unavailability of the terminal device is completed or canceled in the terminal device, the terminal device would initiate a registration process to resume the normal service.

If the CM state of the terminal device in the AMF is the CM-IDLE state, the AMF considers that the terminal device in the RM-REGISTERED state may be reachable through a core network (CN) paging, unless the terminal device applies the MICO mode or the terminal device has indicated an unavailable period duration.

### Registration Procedure

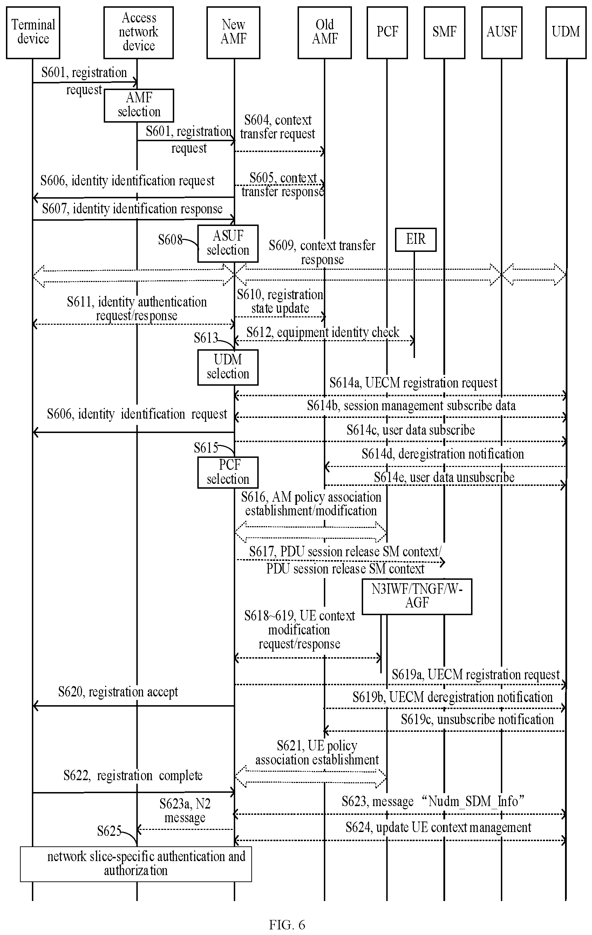

The registration procedure to which the embodiments of the present disclosure are applicable is introduced with reference to FIG. 6. The registration procedure illustrated in FIG. 6 may include operations S601 to S625.

In operation S601, a terminal device transmits a registration request to an access network device.

In operation S602, the access network device selects an AMF.

In operation S603, the access network device transmits the registration request to a new AMF.

In operation S604, the new AMF transmits a UE context transfer request (Namf_Communication_UEContextTransfer) to an old AMF.

In operation S605, the old AMF transmits a UE context transfer response (Namf_Communication_UEContextTransfer response) to the new AMF.

In operation S606, the new AMF transmits an identity identification request (identity request) to the terminal device.

In operation S607, the terminal device transmits an identity response to the new AMF.

In operation S608, the new AMF selects an AUSF.

In operation S609, an authentication/security procedure is performed.

In operation S610, the new AMF transmits a registration status update (Namf_Communication_Registration StatusUpdate) to the old AMF.

In operation S611, the new AMF and the terminal device exchange an identity authentication request and an identity authentication response (identity request/response).

In operation S612, the new AMF and an EIR exchange equipment identity check (N5g-eir_EquipmentIdentityCheck_Get).

In operation S613, the new AMF selects a UDM.

In operation S614a, the new AMF and the UDM exchange a UECM registration request (Nudm_UECM_Registration).

In operation S614b, the new AMF and the UDM exchange session management subscribe data (Nudm_SDM_Get).

In operation S614c, the new AMF transmits user data subscribe (Nudm_SDM_Subscribe) to the UDM.

In operation S614d, the UDM and the old AMF exchange a deregistration notification (Nudm_SDM_Subscribe).

In operation S614e, the old AMF and the UDM exchange user data unsubscribe (Nudm_SDM_Unsubscribe).

In operation S615, the new AMF selects a PCF.

In operation S616, the new AMF and the PCF exchange establishment/modification associated with an AM Policy (AM Policy Association Establishment/Modification).

In operation S617, the new AMF transmits a protocol data unit (PDU) session release SM context (Nsmf_PDUSession_ReleaseSMContext) or PDU session update SM context (Nsmf_PDUSession_UpdateSMContext) to the SMF.

In operation S618, the new AMF transmits a UE context modification request to N3IWF/TNGF/W-AGF.

In operation S619, the new AMF receives a UE context modification response transmitted by the N3IWF/TNGF/W-AGF.

In operation S619a, the new AMF transmits a UECM Registration Request (Nudm_UECM_Registration) to the UDM.

In operation S619b, the UDM transmits a UECM deregistration notification (Nudm_UECM_DeregistrationNotify) to the old AMF.

In operation S619c, the UDM transmits an unsubscribe notification (Nudm_SDM_Unsubscribe) to the old AMF.

In operation S620, the new AMF transmits a registration accept message to the terminal device.

In operation S621, the new AMF and the PCF exchange the establishment process associated with the UE Policy (UE Policy Association Establishment).

In operation S622, the UE transmits a registration complete message to the new AMF.

In operation S623, the new AMF and the UDM exchange the message "Nudm_SDM_Info".

In operation S623a, the new AMF transmits an N2 message to the access network device.

In operation S624, the new AMF and the UDM exchanges update UE context management (Nudm_UECM_Update).

In operation S625, the new AMF and the UDM performs network slice-specific authentication and authorization (Network Slice-Specific Authentication and Authorization).

As illustrated in FIG. 6, the signaling interactions between the terminal device and the AMF involved in the registration procedure in operations S603, S606, S607, S609, S611, S621, S622, and S625 may serve as the first information in the embodiments of the present disclosure.

In some scenarios, the terminal device performs communication with the access network device via a first link, and the access network device performs communication with the core network device via a second link, but the first link and second link cannot be simultaneously available. In this case, when the terminal device needs to transmit the first information to the core network device via the access network device, the first information may be transmitted by the terminal device to the access network device via the first link; however, since the second link is unavailable, the access network device needs to store the first information and wait until the second link is available before transmitting the first information to the core network device via the second link. Accordingly, when the core network device needs to transmit the first information to the terminal device via the access network device, the first information may be transmitted by the core network device to the access network device via the second link; however, since the first link is unavailable, the access network device needs to store the first information and wait until the first link is available before transmitting the first information to the terminal device via the first link.

As described above, since the first link and the second link are not simultaneously available, the transmission process of the first information is divided into multiple stages for transmission. This leads to the communication devices (e.g., the terminal device, the access network device and the core network device introduced above) participated in transmission of the first information being unable to recognize that the multiple stages belong to a single procedure of transmitting the first information. In this case, the communication devices participated in transmission of the first information have inconsistent understandings, resulting in a transmission failure of the first information.

Taking an S&F mode in the NTN scenario as an example, and assuming that the access network device may be deployed on a satellite, in this case, the first link may be the service link between the terminal device and the satellite (i.e., the access network device), and the second link is the feeder link between the satellite (i.e., the access network device) and the ground station. Due to the motion of the satellite, the first link and the second link cannot be simultaneously available. In this case, when the terminal device needs to transmit the first information to the core network device via the access network device, the first information may be transmitted by the terminal device to the access network device via the service link; however, since the feeder link is unavailable, the access network device needs to store the first information and wait until the feeder link is available before forwarding the first information to the core network device via the feeder link. Accordingly, when the core network device needs to transmit the first information to the terminal device via the access network device, the first information may be transmitted by the core network device to the access network device via the feeder link; however, since the service link is unavailable, the access network device needs to store the first information and wait until the service link is available before forwarding the first information to the terminal device via the service link. Therefore, the transmission process of the first information is divided into multiple stages for transmission. This leads to the communication devices (e.g., the terminal device, the access network device and the core network device introduced above) participated in transmission of the first information being unable to recognize that the multiple stages belong to a single procedure of transmitting the first information. In this case, the communication devices participated in the transmission of the first information have inconsistent understandings, resulting in the transmission failure of the first information.

Therefore, to address the above issues, the embodiments of the present disclosure provide a wireless communication method, and an association identifier of the first information is introduced in the method to associate the multiple phases of transmitting the first information. This helps the communication devices participated in transmission of the first information to recognize that multiple phases belong to a single transmission procedure of the first information, so as to improve the success rate of transmission of the first information.

In some implementations, the association identifier may associate the first information transmitted on the first link with the first information transmitted on the second link. For example, in the process where the terminal device transmits the first information to the core network device, the first information may be transmitted by the terminal device to the access network device via the first link and then transmitted from the access network device to the core network device via the second link. In this case, the association identifier of the first information is used to associate the first information transmitted on the first link with the first information transmitted on the second link. As another example, in the process where the core network device transmits the first information to the terminal device, the first information may be transmitted from the core network device to the access network device via the second link and then transmitted from the access network device to the terminal device via the first link. In this case, the association identifier of the first information is used to associate the first information transmitted on the first link with the first information transmitted on the second link.

In still other implementations, the association identifier of the first information may associate the first information with other information transmitted in a signaling procedure with the first information. Taking the first information and a response message for the first information as an example, the first information and the response message for the first information belong to one signaling procedure, and in this case, the association identifier of the first information is used to associate the first information with the response message for the first information. In this case, the association identifier may be understood as being used to identify the signaling procedure associated with the first information.

For example, in a certain signaling procedure, the terminal device transmits the first information to the core network device via the access network device, and accordingly, the core network device transmits a response message to the terminal device for the first information via the access network device. In this case, the transmission of the first information and the transmission of the response message for the first information may be associated through the association identifier. That is, in response to receiving the response message for the first information, the terminal device may acknowledge that the received response message is for the first information.

For another example, in a certain signaling procedure, the core network device transmits the first information to the terminal device via the access network device, and accordingly, the terminal device transmits a response message to the core network device for the first information via the access network device. In this case, the transmission of the first information and the transmission of the response message for the first information may be associated through the association identifier. That is, in response to receiving the response message for the first information, the core network device may acknowledge that the received response message is for the first information.

For still another example, a terminal device may initiate the same signaling procedure multiple times, and in this case, in response to receiving the response message for the first information, the terminal device may determine, through the association identifier, to which signaling procedure that transmits the first information the response message corresponds. Assuming that the terminal device initiates a registration procedure two times, transmits a registration request 1 (as an example of the first information) in a registration procedure 1 and a registration request 2 (as an example of the first information) in a registration procedure 2, in this case, after receiving the registration request 1 via the access network device, the core network device transmits a registration response to the terminal device for the registration request 1 via the access network device. However, for some reasons, the core network device does not transmit the registration response for the registration request 2, and in this case, in response to receiving the registration response transmitted by the core network device, the terminal device may determine that the registration response is the response message for the registration request 1 based on the association identifier. The above is also applicable to the scenario where the core network device transmits the first information to the terminal device via the access network device, which will not be repeated here for brevity.

It should be noted that the above merely takes the same signaling procedure (or in other words, the signaling procedure of the same function) as an example, and the association identifier may also be applied to a scenario in which the first information is required to be transmitted in signaling procedures of different functions. It is assumed that the terminal device initiates a signaling procedure 1 and a signaling procedure 2, transmits the first information in the signaling procedure 1 and transmits the first information in the signaling procedure 2, and in this case, the core network device transmits, after receiving the first information transmitted in the signaling procedure 1 via the access network device, a response message to the terminal device for the first information in the signaling procedure 1 via the access network device, but the core network device does not transmit the response message for the first information in the signaling procedure 2 due to some reasons. In this case, when receiving the response message transmitted by the core network device, the terminal device may determine that the response message is the response message for the signaling procedure 1 based on the association identifier. The above is applicable to the scenario in which the core network device transmits the first information to the terminal device via the access network device, which will not be repeated here for brevity.

The terminology name of the association identifier is not limited in the embodiments of the present disclosure. In some implementations, the association identifier may be replaced with "identifier". Certainly, the association identifier may also be replaced with other terms.

In some implementations, the association identifier of the first information may be generated based on a transmission time of the first information. For example, the association identifier of the first information may be used to identify the transmission time of the first information. In other implementations, the association identifier of the first information may be generated based on the transmission time of the first information and an identifier of a terminal device associated with the first information. For example, the association identifier of the first information may be used to identify the transmission time of the first information and a terminal device receiving or transmitting the first information. The content and generation manner of the association identifier are not limited in the embodiments of the present disclosure.

As introduced above, the solution in the embodiments of the present disclosure may be applied to the NTN scenario. In the embodiments of the present disclosure, there is no limitation on network elements deployed on the satellite. In some implementations, the network elements deployed on the satellite may include the access network device, or in other words, the network elements deployed on the satellite may be used to implement some or all functionalities of the access network device. In other implementations, the network elements deployed on the satellite may include the access network device and the AMF, or in other words, the network elements deployed on the satellite may be used to implement some or all functionalities of the access network device and the AMF. In still other implementations, the network elements deployed on the satellite may include the access network device and the MME, or in other words, the network elements deployed on the satellite may be used to implement some or all functionalities of the access network device and the MME. Certainly, in the embodiments of the present disclosure, the access network device and other core network devices may also be deployed on the satellite.

In some implementations, the first link serves for communications between the terminal device and the access network device. Taking the NTN scenario as an example, the first link may be a communication link for communications between the satellite and the terminal device. For example, the first link may include a service link. In other scenarios, the first link may be replaced with a first interface, and first interface serves for communications between the terminal device and the access network device. For example, the first interface may include an NR interface. In still other scenarios, the first link may be a link within the first interface, and taking the NR interface as an example, the first link may include a connection on the NR interface.

In some implementations, the second link serves for communications between the terminal device and the core network device. Taking the NTN scenario as an example, the second link may be a communication link for communications between the satellite and the ground station, where the ground station may include core network device(s) located on the ground. Therefore, the second link may also be understood as a communication link for communications between the satellite and the core network device. For example, the second link may include a feeder link. In other scenarios, the second link may be replaced with a second interface, and the second interface serves for communications between the access network device and the core network device. For example, the second interface may include a Uu interface. In still other scenarios, the second link may be a link in the second interface, and taking the Uu interface as an example, the first link may include a connection on the Uu interface.

In some implementations, the first information is used for transmission between the terminal device and the core network device (e.g., AMF). For example, the first information may be transmitted by the terminal device to the core network device via the access network device. For another example, the first information may be transmitted by the core network device to the terminal device via the access network device, where the core network device may be an AMF or any core network device mentioned above.

In other scenarios, an N1 interface may serve for communications between the terminal device and the core network device, and therefore, the first information may be understood as information transmitted through the N1 interface. In some implementations, the first information may be NAS signaling transmitted through the N1 interface. For ease of understanding, the first information and the signaling procedure associated with the first information in the embodiments of the present disclosure are introduced below.

Taking an example where the signaling procedure associated with the first information is a registration management procedure, the first information may include one or more of: a registration request, a registration complete message, a deregistration request, a de-registration accept message, or a registration accept.

In the embodiments of the present disclosure, there is no limitation on the registration management procedure. For example, the registration management procedure may include one or more of: an initial registration procedure, a periodic registration procedure, an emergency registration procedure, or a de-registration procedure.

Taking an example where the signaling procedure associated with the first information is a session management procedure, the first information may include one or more of: a PDU session establishment request, a PDU session modification request, a PDU session release request, a PDU session establishment accept message, a PDU session modification command, or a PDU session release command.

In the embodiments of the present disclosure, there is no limitation on the session management procedure. For example, the session management procedure may include one or more of: a PDU session establishment procedure, a PDU session modification procedure, or a PDU session release procedure.

Taking an example where the signaling procedure associated with the first information is a service request procedure, the first information may include a service request message.

Taking an example where the signaling procedure associated with the first information is an authentication/authorization procedure, the first information may include one or more of: an authorization request, an authorization response, or an identity authentication message.

In the embodiments of the present disclosure, there is no limitation on the authentication/authorization procedure. For example, the authentication/authorization procedure may include one or more of: an authentication procedure in a registration procedure, NAS security initiation, a secondary authentication procedure in a PDU session establishment procedure, or a secondary authorization procedure in a PDU session establishment procedure.

Taking an example where the signaling procedure associated with the first information is an attach/detach (ATTACH/DETACH) procedure, the first information may include one or more of: an attach request, a detach request, an attach accept, or a detach accept.

Taking an example where the signaling procedure associated with the first information is a tracking area update (TAU) procedure, the first information may include a tracking area update request (TAU request) and/or a TAU accept message.

Taking an example where the signaling procedure associated with the first information is a UE configuration update procedure, the first information may include a UE configuration update command.

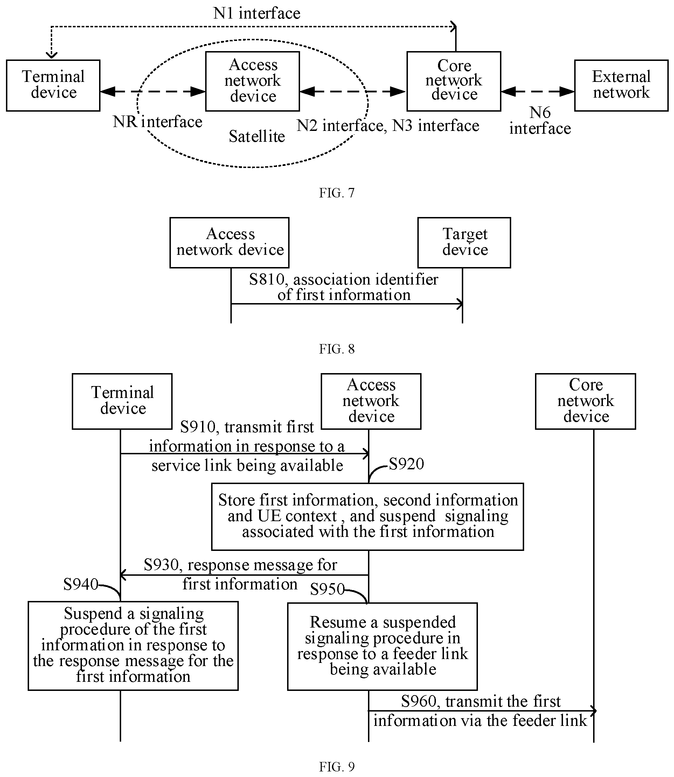

For ease of understanding, the first link, the second link and the first information in the embodiments of the present disclosure are introduced below with reference to FIG. 7 by taking an example where the access network device is disposed on the satellite. As illustrated in FIG. 7, the terminal device may perform communication with the satellite through the NR interface, and accordingly, the satellite may perform communication with the core network device located on the ground through the Uu interface. The terminal device may transmit the first information to the core network device through the N1 interface. The core network device may perform communication with an external network through the N6 interface. Here, the Uu interface may include an N2 interface and an N3 interface.

The association identifier of the first information provided in the embodiments of the present disclosure is introduced above. The transmission manner of the association identifier of the first information in the embodiments of the present disclosure is introduced below with reference to FIG. 8. The method illustrated in FIG. 8 includes operation S810.

In operation S810, the access network device transmits the association identifier of the first information to a target device. Here, the target device may be a terminal device and/or a core network device.

In some implementations, the operation S810 includes: in response to receiving the first information transmitted by the target device, the access network device transmits a response message to the target device for the first information, where the response message for the first information carries the association identifier of the first information. That is, after receiving the first information, the access network device may carry the association identifier of the first information through the response message for the first information.

As mentioned above, the target device may include the terminal device and/or the core network device, and the content of information carried in the response message for the first information for different devices may be different.

Taking an example where the target device includes the terminal device, in some implementations, the response message for the first information includes one or more of: an identifier of the terminal device; area information where the first link is available; information for indicating an acknowledgment of a reception of the first information; information for indicating an available time of the first link; information for indicating an available time of the second link; a time for indicating the terminal device to re-establish a connection with the access network device; or information for indicating that the access network device is in a store-and-forward mode.

Taking an example where the response message for the first information includes the identifier of the terminal device, the identifier of the terminal device is used to identify the terminal device. For example, in a scenario where the terminal device transmits the first information to the core network device, when the core network device needs to transmit a second response message to the terminal device for the first information, the access network device needs to page the terminal device to receive the second response message for the first information. In this case, the access network device may page the terminal device based on the identifier of the terminal device, and accordingly, the terminal device may determine whether it is being paged based on the identifier of the terminal device.

In some implementations, the identifier of the terminal device may be one or more of: a subscription permanent identifier (SUPI), a subscription concealed identifier (SUCI), a paging early indication (PEI), an temporary mobile subscriber identity (TMSI), a globally unique temporary identifier (GUTI), a 5G-S-TMSI, a globally unique AMF ID (GUAMI), a radio network temporary identifier (RNTI), a Cell-RNTI (C-RNTI), an inactive-RNTI (I-RNTI), an access network device ID, a random number generated by the terminal device, or a random number generated by the RAN.

In other implementations, the above-mentioned identifier may be a local identifier or an inherent identifier of the terminal device, or the above-mentioned identifier may be an identifier assigned to the terminal device by the access network device.

It should be noted that the response message transmitted by the access network device to the terminal device for the first information is different from the second response message. The response message for the first information may be a feedback message transmitted by the access network device to the terminal device after receiving the first information. The second response message is a response message transmitted by the core network device for the first information; or in other words, the second response message is a response message in the signaling procedure where the first information is located. For example, the first information is a registration request, and the second response message may be a registration accept response message in the registration management procedure.

Taking an example where the response message for the first information includes the area information where the first link is available, in some implementations, an area indicated by the area information may be an area within which the terminal device may be paged by the access network device. That is, in a case where the terminal device is located in this area, the terminal device may be paged by the access network device. Accordingly, when the first link is available, the access network device may provide services to the terminal device via the first link. Conversely, in a case where the terminal device is not located in this area, the terminal device cannot be paged by the access network device. Accordingly, when the first link is available, the access network device also cannot provide services to the terminal device via the first link.

In the embodiments of the present disclosure, the area information where the first link is available may be configured by the access network device for the terminal device. Certainly, in the embodiments of the present disclosure, the area information may also be pre-defined or pre-configured.

For example, the response message for the first information includes the information for indicating the acknowledgment of the reception of the first information, that is, the response message for the first information is used to indicate that the access network device has received the first information.

For example, the response message for the first information includes the information for indicating the available time of the first link, or in other words, the response message for the first information is used to determine the available time of the first link, thereby helping the terminal device determine a time to use the first link next time based on the response message for the first information.

In some implementations, in a case where the available time of the first link is periodic, the available time of the first link may indicate an available period of the first link. Accordingly, the response message for the first information may include a start time of the available period, and/or a duration of the available period. In other implementations, the response message for the first information may indicate a next time period during which the first link is available. For example, the response message for the first information may include a next start time during which the first link is available. For another example, the response message for the first information may include a next duration during which the first link is available.

For example, the response message for the first information includes the information for indicating the available time of the second link, or in other words, the response message for the first information is used to determine the available time of the second link. In some implementations, in a case where the available time of the second link is periodic, the available time of the second link may indicate an available period of the second link. Accordingly, the response message for the first information may include a start time of the available period, and/or a duration of the available period. In still other implementations, the response message for the first information may indicate a next time when the second link is available. For example, the response message for the first information may include a next start time when the second link is available. For another example, the response message for the first information may include a next duration during which the second link is available.

For example, the response message for the first information includes the time for indicating the terminal device to re-establish a connection with the access network device, that is, the response message for the first information is used to inform the terminal device of the time to access the access network device again.

In some implementations, the response message for the first information includes a specific time for the terminal device to re-establish the connection with the access network device. In still other implementations, the response message for the first information is used to indicate a time period, and the time period is a time period between the time when the terminal device receives the response message for the first information and the time when the terminal device re-establishes the connection with the access network device. For example, the response message for the first information may carry a specific time period. For another example, the response message for the first information may carry a first timer and indicate a time period through the first timer.

Taking an example where the response message for the first information includes the information for indicating that the access network device is in the store-and-forward mode, this information may also be referred to as a "store-and-forward indication".

In the embodiments of the present disclosure, there is no limitation on the number of bits occupied by the above-mentioned information carried in the response message for the first information. In some implementations, some of the above-mentioned information may each occupy one bit to reduce the transmission resources occupied for transmitting the response message for the first information. For example, the store-and-forward indication may occupy one bit. For another example, the information for indicating the acknowledgment of the reception of the first information may occupy one bit. In other implementations, some of the above-mentioned information may each occupy multiple bits. For example, the information for indicating the available time of the second link may occupy multiple bits. For another example, the time for indicating the terminal device to re-establish the connection with the access network device may occupy multiple bits.

Taking an example where the target device is the core network device, in some implementations, the response message for the first information includes one or more of: an identifier of the terminal device; information for indicating an acknowledgment of a reception of the first information; or information for indicating that the access network device is in a store-and-forward mode. It should be understood that, for the meanings of the above-mentioned three types of information, the above introduction may be referred to, which will not repeated here for brevity.

In some scenarios, when transmitting the first information to the access network device, the target device may also transmit other information. For different types of target devices, the content carried in the other information may be slightly different. The other information is introduced below by taking second information and third information as examples.

Taking the example where the target device is a terminal device, in some implementations, the above method further includes: the terminal device transmitting the second information to the access network device. It should be noted that the first information may be transmitted simultaneously with the second information, or the first information may be transmitted independently of the second information, which is not limited in the embodiments of the present disclosure.

In some implementations, the second information includes one or more of: mobility information of the terminal device; a time when the terminal device is in an area where the first link is available; a time by which the terminal device expects the signaling procedure associated with the first information to be completed; or a time when the terminal device re-accesses the access network device after disconnecting from the access network device.

For example, the second information includes the mobility information of the terminal device, thereby helping the access network device determine the available time of the first link based on the mobility information of the terminal device. In some implementations, the mobility information may include one or more of following information: a moving trajectory of the terminal device, a direction of the terminal device, or a speed of the terminal device.

For example, the second information includes the time when the terminal device is in the area where the first link is available, thereby helping the access network device determine whether it is able to continue providing the services to the terminal device. It should be understood that, for the area where the first link is available, the above introduction may be referred to, which will not repeated below for brevity.

In some implementations, the time when the terminal device is in the area where the first link is available may include a time when the terminal device re-enters the area after leaving the area; and/or a duration during which the terminal device is located in the area.

In some implementations, the second information may carry: a start time of the time when the terminal device is in the area where the first link is available and/or a duration of the time when the terminal device is in the area where the first link is available, to indicate the time when the terminal device is in the area where the first link is available, which is not limited in the embodiments of the present disclosure.

For example, the second information includes the time by which the terminal device expects the signaling procedure associated with the first information to be completed, thereby helping the access network device determine the available time of the first link. For example, in a case where the first link may provide services for multiple terminal devices, and among the multiple terminal devices, the time by which a terminal device 1 expects the signaling procedure associated with the first information to be completed is earlier, in this case, the access network device may prioritize transmitting the signaling procedure associated with the first information for the terminal device 1 when the first link is available.

In some implementations, a signaling procedure associated with the first information may be understood as a signaling procedure to which the first information belongs, that is, the transmission of the first information may be an information transmission process of the signaling procedure. Taking the example where the first information is the registration request, the signaling procedure associated with the first information may include the registration management procedure. Taking the example where the first information includes the PDU session establishment request, the signaling procedure associated with the first information may include the session management procedure. It should be understood that the signaling procedure associated with the first information is introduced in the above description of introducing the first information, which will not be repeated here for brevity.

In some implementations, the second information may carry a start time of the time when the terminal device is in the area where the first link is available and/or a duration of the time when the terminal device is in the area where the first link is available, to indicate the time when the terminal device is in the area where the first link is available, which is not limited in the present disclosure.

For example, the second information includes the time when the terminal device re-accesses the access network device after disconnecting from the access network device, or in other words, the second information includes a time when the terminal device next accesses the access network device, thereby enabling the access network device to determine whether it is able to provide services to the terminal device.

In some implementations, the second information may include a start time of a next access to the access network device by the terminal device and/or a duration of a next access to the access network device by the terminal device, which are not limited in the embodiment of the present disclosure.

Taking the example where the target device is a core network device, in some implementations, the above method further includes: the core network device transmitting the third information to the access network device. It should be noted that the first information may be transmitted simultaneously with the third information, or the first information may be transmitted independently of the third information, which is not limited in the embodiments of the present disclosure.

In some implementations, the third information includes the identifier of the terminal device; and/or the available time of the second link. For the meaning of the identifier of the terminal device, the above description may be referred to, which will not be repeated here for brevity.

In some implementations, the available time of the second link includes a time when a connection of the second link is resumed after being disconnected, where the time when the connection is resumed may refer to a time, subsequent to transmitting the third information via the second link, when a connection of the second link is resumed after being disconnected. Certainly, in the embodiments of the present disclosure, in a case where the available time of the second link is periodic, the available time of the second link may be an available period of the second link.

As mentioned above, since the first link and the second link do not exist simultaneously, the access network device cannot continue transmitting the first information after receiving the first information transmitted by the target device. In this case, to facilitate the subsequent continuation of the transmission process of the first information, the embodiments of the present disclosure design the relevant operations that the access network device needs to perform.

In some implementations, the above method further includes: in response to receiving the first information, the access network device performs one or more of: storing the first information; storing context information of the terminal device; or suspending the signaling procedure associated with the first information.

For example, the access network device stores the first information, thereby helping the access network device promptly transmit the first information after resuming the transmission process of the first information.

For example, the access network device stores the context information of the terminal device, thereby helping the access network device determine a terminal device associated with the first information after resuming the transmission process of the first information. Here, the terminal device associated with the first information may include the terminal device transmitting the first information or the terminal device receiving the first information.

For example, the access network device suspends the signaling procedure associated with the first information, or in other words, the access network device pauses the signaling procedure associated with the first information. For example, the access network device suspending the signaling procedure associated with the first information may include: the access network device pausing the signaling procedure associated with the first information and deleting information (e.g., the first information and/or the association identifier of the first information) associated with the signaling procedure. For another example, the access network device suspending the signaling procedure associated with the first information may include: the access network device pausing the signaling procedure associated with the first information and releasing transmission resources for the signaling procedure associated with the first information, where the transmission resources may include one or more of: time-domain resources, frequency-domain resources, or spatial-domain resources.

In some implementations, in a case where the target device is the terminal device, the above method further includes: in a case where the second link is available, the access network device transmits the first information to the core network device via the second link.

It should be noted that the first information transmitted via the second link may be different from the first information transmitted via the first link. For example, after receiving the first information transmitted via the first link, the access network device may process the first information and transmit the processed first information via the second link. Certainly, in the embodiments of the present disclosure, the first information transmitted via the second link may be the same as the first information transmitted via the first link.

In the embodiments of the present disclosure, there is no limitation on the processing manner of the first information. For example, the association identifier of the first information may be added into the first information, and then the first information added with the association identifier of the first information may be transmitted via the second link. For another example, the access network device may repackage the first information and transmit the repackaged first information via the second link, and in this case, the content included in the first information may remain the same.

In some implementations, in a case where the target device is the core network device, the method further includes: in a case where the first link is available, the access network device transmits the first information to the terminal device via the first link.

It should be noted that the first information transmitted via the second link may be different from the first information transmitted via the first link. For example, after receiving the first information transmitted via the second link, the access network device may process the first information and transmit the processed first information via the first link. Certainly, in the embodiments of the present disclosure, the first information transmitted via the second link may be the same as the first information transmitted via the first link.

In the embodiments of the present disclosure, there is no limitation on the processing manner of the first information. For example, the access network device may add the association identifier of the first information into the first information and then transmit the first information added with the association identifier of the first information via the first link. For another example, the access network device may repackage the first information and transmit the repackaged first information via the first link, where the content included in the first information may remain the same.

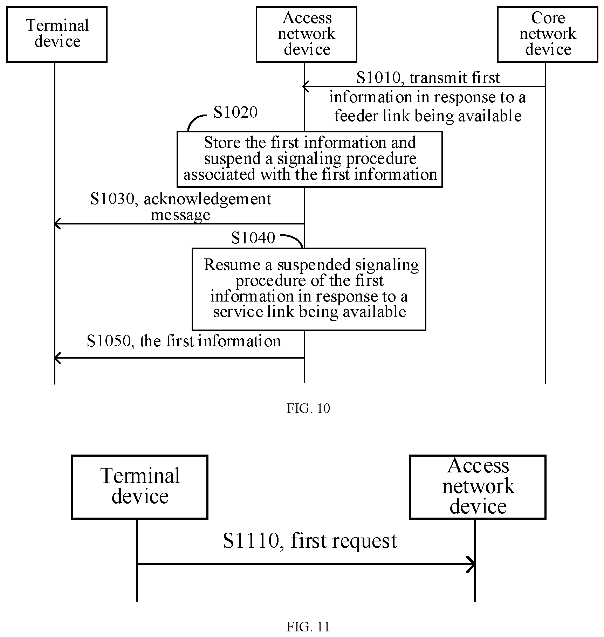

For ease of understanding, the transmission process of the association identifier of the first information in the embodiments of the present disclosure is introduced below with reference to FIG. 9 and FIG. 10. The solution illustrated in FIG. 9 is introduced by taking the example where the terminal device transmits the first information to the core network device via the access network device. The solution illustrated in FIG. 10 is introduced by taking the example where the core network device transmits the first information to the terminal device via the access network device.

FIG. 9 is a schematic flowchart illustrating a transmission process of the association identifier of first information in the embodiments of the present disclosure. The method illustrated in FIG. 9 includes operations S910 to S96**0**.

In operation S910, in response to the service link being available, the terminal device transmits the first information to the access network device.

In some implementations, the first information may be an N1 signaling message, where the N1 interface is an interface between the terminal device and the AMF, and for details, please refer to the above description of the first information.

In some implementations, the information transmitted by the terminal device to the access network device may further include the second information, in addition the signaling message (i.e., the first information) that needs to be forwarded by the access network device to the access and mobility management function entity. Here, the second information may include a time when the terminal device next accesses an access network device on a satellite; mobility information of the terminal device; a time by which the terminal device expects a current signaling procedure to be completed; a time when the terminal device is located in a current area (i.e., an area where the first link is available); or a time when the terminal device re-enters the current area next time.

In operation S920, the access network device stores the first information, the second information and the UE context, and suspends signaling associated with the first information.

In operation S930, the access network device transmits a response message for the first information to the terminal device.

In some implementations, the response message for the first information includes at least one of: acknowledgment information, used for informing the terminal device that the signaling message transmitted by the terminal device has been received; time information where the service link is available; time information where the feeder link is available; a first timer, used for informing the terminal device when to re-access the access network device; the identifier information of the terminal device; the association identifier of the first information; a store-and-forward indication; or an area where the first link is available.

In some implementations, the access network device on the satellite may start a timer for this terminal device. If the terminal device still has not connected to the access network device on the satellite when the timer expires, the access network device releases the suspended signaling procedure associated with the first information for this terminal device.

In some implementations, after transmitting the response message for the first information, the access network device releases the connection with the terminal device.

In operation S940, in response to the response message for the first information, the terminal device suspends the signaling procedure of the first information.

In some implementations, the terminal device may also set a timer for the suspended signaling procedure associated with the first information based on one or more of: preconfigured information, a timer provided by the network side, the available time of the feeder link, or the available time of the service link.

In operation S950, when the feeder link is available, the access network device resumes the suspended signaling procedure. For example, the access network device may resume the signaling procedure based on an S&F priority, where the priority may be determined based on one or more of: a terminal device priority or a service priority.

In operation S960, the access network device transmits the first information to the core network device via the feeder link.

In some implementations, the first information may be the first information transmitted from the terminal device (refer to operation S910), or the first information may be a signaling message generated by the access network device based on the first information transmitted by the terminal device.

In some implementations, the core network device may be an access and mobility function network element, that is, a network entity having an access and mobility management function, such as an MME or an AMF. In addition, the information forwarded by the access network device to the core network device may also include the identifier information of the terminal device, the association identifier of the first information, the store-and-forward indication, or other information.

FIG. 10 is a schematic flowchart illustrating the transmission process of the association identifier of the first information in another embodiment of the present disclosure. The method illustrated in FIG. 10 includes operations S1010 to S1050.

In operation S1010, in response to the feeder link being available, the core network device transmits the first information to the access network device.

In some implementations, the first information may be signaling that needs to be transmitted to the terminal device in the signaling procedure initiated by the core network device. For example, the first information may include a deregistration request.

In still other implementations, the first information may be a response message that needs to be fed back by the core network device to the terminal device in the signaling procedure initiated by the terminal device. For example, the signaling procedure initiated by the terminal device is a registration procedure, and the terminal device transmits a registration request to the access network device. Accordingly, the first information may include a response message for the registration request, e.g., a registration accept message.

In some implementations, the message transmitted by the core network device to the access network device may include, in addition to the first information, at least one of: an identifier of the terminal device; the association identifier of the first information; a current time when the feeder link is available; or a next time when the feeder link is available.

In operation S1020, the access network device stores the first information and suspends the signaling procedure associated with the first information.

In operation S1030, in a case where the signaling procedure associated with the first information is initiated by the core network device, the access network device transmits an acknowledgment message to the core network device.

In some implementations, the acknowledgment message may include at least one of: acknowledgment information; the identifier information of the terminal device; the association identifier of the first information; or the store-and-forward indication.

In operation S1040, in response to the service link being available, the access network device resumes the suspended signaling procedure of the first information.

In operation S1050, the access network device transmits the first information to the terminal device via the first link.

In some implementations, the first information may be the first information transmitted from the terminal device (refer to operation S1010), or the first information may be a signaling message generated by the access network device based on the first information transmitted by the terminal device.

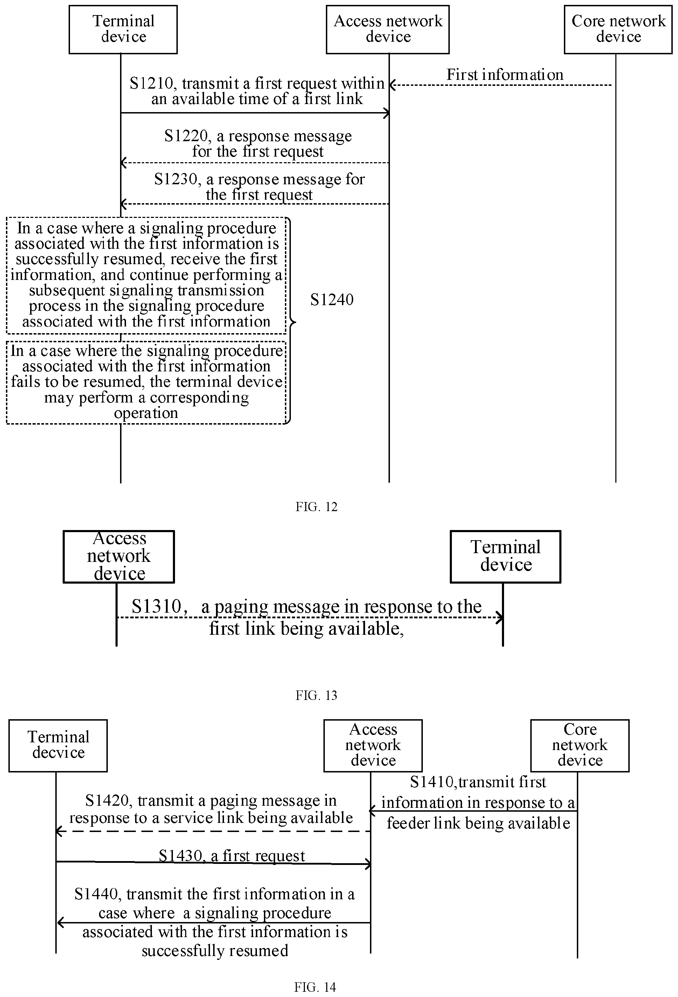

In some implementations, in operation S1050, only when the service link is available, the access network device may first establish a connection with the terminal device and then transmit the first information to the terminal device after the connection is established. In this case, the access network device and the terminal device may establish the connection by using the following two manners: the terminal device autonomously triggering connection resumption (e.g., see FIG. 11); and the access network device paging the terminal device to receive the first information (e.g., see FIG. 13). Certainly, in the embodiments of the present disclosure, the access network device and the terminal device may also establish the connection by using other manners.

As mentioned above, since the first link and the second link do not exist simultaneously, the information transmission process between the terminal device and the core network device is divided into multiple stages. For example, after receiving the first information transmitted by the terminal device, the access network device would suspend the signaling procedure associated with the first information, and resumes the signaling procedure associated with the first information when the second link is available. However, after resuming the signaling procedure associated with the first information, how to determine the terminal device that participates in the signaling procedure associated with the first information is an urgent problem to be solved.

Therefore, to address the above problem, the embodiments of the present disclosure provide a wireless communication method in which the terminal device can actively request the access network device to resume the signaling procedure associated with the first information, so as to indicate that it is the terminal device itself participating in the signaling procedure associated with the first information. The wireless communication method according to the embodiments of the present disclosure is described below with reference to FIG. 11. The method illustrated in FIG. 11 includes operation S1110.

In operation S1110, the terminal device transmits a first request to the access network device, where the first request is used to request resuming the signaling procedure associated with first information.

In some implementations, the first information may be transmitted via a communication link between the terminal device and the core network device, where the communication link includes the first link and the second link. For the relevant introduction of the first link and the second link, please refer to the above description, which will not be repeated here for brevity.

In some implementations, suspending of the signaling procedure associated with the first information is triggered based on unavailability of the first link, or suspending of the signaling procedure associated with the first information is triggered based on unavailability of the second link. Or, in other words, the suspending of the signaling procedure associated with the first information is triggered based on simultaneous unavailability of both the first link and the second link.

In some implementations, the operation S1110 includes: within the available time of the first link, the terminal device transmits the first request to the access network device. Or, in other words, in response to the first link being available, the terminal device transmits the first request to the access network device.

In the embodiments of the present disclosure, there is no limitation on the determining manner of the available time of the first link. In some implementations, the available time of the first link may be determined based on a first timer and/or based on ephemeris information of a satellite where the access network device is located. Certainly, in the embodiments of the present disclosure, the terminal device may trigger the first request based on pre-configured information or pre-defined information.

Taking the example where the available time of the first link may be determined based on the first timer, in some implementations, the access network device may configure the first timer through the response message for the first information introduced above. Certainly, in the embodiments of the present disclosure, the first timer may also be pre-defined or pre-configured.

For the example where the available time of the first link may be determined based on the ephemeris information of the satellite where the access network device is located, the ephemeris information may be used to indicate a precise position or a trajectory of the satellite as it changes over time. In general, the ephemeris information may be represented as an expression of a position and a motion velocity of the satellite.

In some implementations, the first request includes one or more of: the identifier of the terminal device; the mobility information of the terminal device; information for indicating to resume the signaling procedure associated with the first information (also referred to as "resumption indication information of the signaling procedure"); or the association identifier of the first information.

In some implementations, the identifier of the terminal device may be used to identify the terminal device. For example, the identifier of the terminal device may include an international mobile subscriber identity (IMSI). For another example, the identifier of the terminal device may include a GUTI. Certainly, in the embodiments of the present disclosure, the identifier of the terminal device may be any other identifier.

In some implementations, the mobility information of the terminal device may include one or more of following information: a moving trajectory of the terminal device, a moving direction of the terminal device, or a speed of the terminal device. Accordingly, carrying the mobility information of the terminal device in the first request helps the access network device determine whether to resume the signaling procedure for the terminal device.

In some implementations, carrying the association identifier of the first information in the first request helps the access network device determine the signaling procedure to be resumed. Here, for the association identifier of the first information, please refer to the above introduction.

In some implementations, the method further includes: the access network device transmitting the response message to the terminal device for the first request, where the response message for the first request is used to indicate that the signaling procedure associated with the first information is successfully resumed.

In some implementations, the response message for the first request carries the first information, which helps to reduce the delay of transmitting the first information. Certainly, in the embodiments of the present disclosure, the first information is transmitted separately after the response message for the first request. That is, the access network device may first transmit the response message for the first request to the terminal device, so as to indicate that the signaling procedure associated with the first information is successfully resumed. Subsequently, the access network device may transmit the first information to the terminal device.

In some implementations, the method further includes: the access network device transmitting the response message to the terminal device for the first request, where the response message for the first request is used to indicate that the signaling procedure associated with the first information fails to be resumed.

In some implementations, the response message for the first request includes one or more of: an identifier of the terminal device; information for indicating an available time of the first link after a failure to resume the signaling procedure; information for indicating an available time of the second link after a failure to resume the signaling procedure; information for indicating a failure to resume the signaling procedure associated with the first information; information for indicating a reason for a failure to resume the signaling procedure associated with the first information; a second timer; or an association identifier of the first information.

Taking the example where the response information for the first request carries the identifier of the terminal device, for the identifier of the terminal device, please refer to the identifier of the terminal device introduced above, which will not be repeated here for brevity.

Taking the example where the response information for the first request carries the information for indicating the available time of the first link after the failure to resume the signaling procedure, the information of the available time of the first link may include: an earliest available time among available times of the first link subsequent to transmitting the response message for the first request, or in other words, an available time, subsequent to the transmission of the response message for the first request, when entering the first link for the first time, so that the terminal device may re-establish a connection with the functional entity on the satellite via the first link.

In some implementations, in a case where the available time of the first link is periodic, the above information may indicate an available period of the first link, and/or a duration of the available period. In other implementations, the above information may indicate a start time of the available time length of the first link, and/or a duration of the available time length of the first link.

Taking the example where the response information for the first request carries the information for indicating the failure to resume the signaling procedure associated with the first information, this information may be used to indicate that the signaling procedure associated with the first information of the terminal device fails to be resumed.

Taking the example where the response message for the first request carries the second timer, the second timer is used to determine a time for the terminal device to retransmit the first request, or in other words, the second timer is used to determine a time for the terminal device to continue suspending the signaling procedure associated with the first information, or further in other words, the second timer is used to determine a time for the terminal device to reuse the first link to transmit the first request. In this case, it can be understood that the second timer is used to determine the available time of the first link for the terminal device to retransmit the first request.

Taking the example where the response message for the first request carries the information for indicating the reason for the failure to resume the signaling procedure associated with the first information, in some implementations, the above reason may include that the first information is not stored in the access network device, and/or that the first information transmitted by the core network device is not received by the access network device.

In some implementations, the first information being not stored in the access network device may include that the access network device has deleted the stored first information. In the embodiments of the present disclosure, there is no limitation on the reason of deleting the first information. For example, the access network device deletes the first information because the signaling procedure associated with the first information has been suspended for too long. For another example, the first information is deleted due to the expiration of the first timer. As mentioned above, the first timer may be used to determine the time length of suspending the signaling procedure associated with the first information.

In some implementations, in a case where the access network device does not receive the first information transmitted by the core network device, the access network device may consider that the transmission process of the first information may fail. In this case, the access network device may consider that the signaling procedure associated with the first information fails to be resumed.

Taking the example where the response message for the first request carries the association identifier of the first information, the association identifier of the first information may refer to the above introduction, which will not be repeated here for brevity.

In some implementations, the above method includes: in response to the failure to resume the signaling procedure associated with the first information, the terminal device performs one of following operations: releasing the signaling procedure associated with the first information; or starting a second timer.

The example where the terminal device releases the signaling procedure associated with the first information may include: the terminal device releasing related information (e.g., the association identifier of the first information) of the signaling procedure associated with the first information, and/or transmission resources for the signaling procedure associated with the first information.

The example where the terminal device starts the second timer may be understood that the terminal device continues suspending the signaling procedure associated with the first information based on the second timer, and continues transmitting the first request to the access network device after the second timer expires.

For ease of understanding, the schematic diagram of the wireless communication method according to the embodiments of the present disclosure is introduced below with reference to FIG. 12. The method illustrated in FIG. 12 includes operations S1210 to S1240. It is assumed that the core network device first transmits the first information to the access network device via the second link.

In operation S1210, within the available time of the first link, the terminal device transmits the first request to the access network device to request resuming the signaling procedure associated with the first information.

In some implementations, the available time of the first link may be determined based on one or more of: the ephemeris information of the satellite where the access network device is located; the first timer; or the pre-configured information.

In some implementations, the first request may include at least one of: the identifier of the terminal device; the association identifier of the first information; resumption indication information of the signaling procedure; or the mobility information of the terminal device.

In operation S1220, in response to the first request, the access network device transmits a response message to the terminal device for the first request, where the response message for the first request indicates that the signaling procedure associated with the first information is successfully resumed.

In some implementations, the response message for the first request may carry the first information.

In operation S1230, in response to the first request, the access network device transmits a response message to the terminal device for the first request, where the response message for the first request indicates that the signaling procedure associated with the first information fails to be resumed.

In some implementations, the response message for the first request may include at least one of: an identifier of the terminal device; an association identifier of the first information; a resumption failure indication of the signaling procedure; a resumption failure reason of the signaling procedure; a next available time of the service link; a next available time of the feeder link; or a second timer.

In some implementations, the resumption failure reason of the signaling procedure includes one or more of: the access network device having deleted the related information of the suspended signaling procedure; or the access network device having not yet received a subsequent signaling procedure from the core network device. Here, the access network device having deleted the related information of the suspended signaling procedure may include, for example, the access network device suspending the signaling procedure associated with the first information for too long, exceeding a certain time threshold or timer (e.g., the first timer).

In operation S1240, in a case where the signaling procedure associated with the first information is successfully resumed, the terminal device receives the first information and continues performing a subsequent transmission process of signaling in the signaling procedure associated with the first information.

In a case where the signaling procedure associated with the first information fails to be resumed, the terminal device may perform one of following operations: releasing a current signaling procedure and re-initiating a new signaling procedure; or resetting a new timer and waiting for the service link to become available next time before re-initiating the first request to resume the signaling procedure associated with the first information.

The solution where the terminal device autonomously triggers the resumption of the suspended signaling procedure associated with the first information is introduced above. A wireless communication method of another embodiment of the present disclosure is introduced below with reference to FIG. 13. In this method, the access network device may page the terminal device that participates in the signaling procedure associated with the first information.

FIG. 13 is a schematic diagram of a wireless communication method according to an embodiment of the present disclosure. The method illustrated in FIG. 13 includes operation S1310.

In operation S1310, in response to a first link being available, an access network device transmits a paging message, where the paging message is used to page a terminal device that receives first information.

In some implementations, the first information is transmitted via a communication link between the terminal device and a core network device. The communication link includes the first link and a second link. For the solution about the first information, the first link and the second link, please refer to the above introduction, which will not be repeated here for brevity.

In some implementations, the paging message includes one or more of: the first information; an identifier of the terminal device; information for indicating to resume a signaling procedure associated with the first information; or an association identifier of the first information.

Taking an example where the paging message includes the first information, the first information to be transmitted may be transmitted though the paging message, so as to reduce the delay in transmitting the paging message. Certainly, in the embodiments of the present disclosure, the first information may be transmitted separately after the terminal device is paged by the access network device though the paging message.

It should be noted that the first information may be transmitted by the core network device to the terminal device via the access network device.

Taking an example where the paging message includes the identifier of the terminal device, the terminal device may determine whether itself is paged based on the identifier information of the terminal device carried in the paging message.

Taking an example where the paging message includes the information for indicating to resume the signaling procedure associated with the first information, the terminal device may determine, based on this information, a purpose of the paging initiated by the access network device.

Taking an example where the paging message includes the association identifier of the first information, the terminal device may determine, based on this information, the signaling procedure associated with the first information that the access network device indicates to resume.

In some implementations, the first information may be transmitted by the terminal device to the core network device via the access network device. In this case, after receiving the paging message, the terminal device may transmit the first information to the access network device.

In some implementations, the above method further includes: in response to the paging message, the terminal device transmits a first request to the access network device, where the first request is used to request resuming the signaling procedure associated with the first information. For the introduction of the first request, please refer to the above.

It should be noted that the solution illustrated in FIG. 12 may be combined with the above solution illustrated in FIG. 10. That is, after the terminal device transmits the first request, for the signaling procedure associated with the first information, please refer to the above solution illustrated in FIG. 10. Certainly, in the embodiments of the present disclosure, the solution illustrated in FIG. 12 may be used separately from the above solution illustrated in FIG. 10. In this case, after the terminal device transmits the first request, the resumption of the signaling procedure associated with the first information may use other procedures.

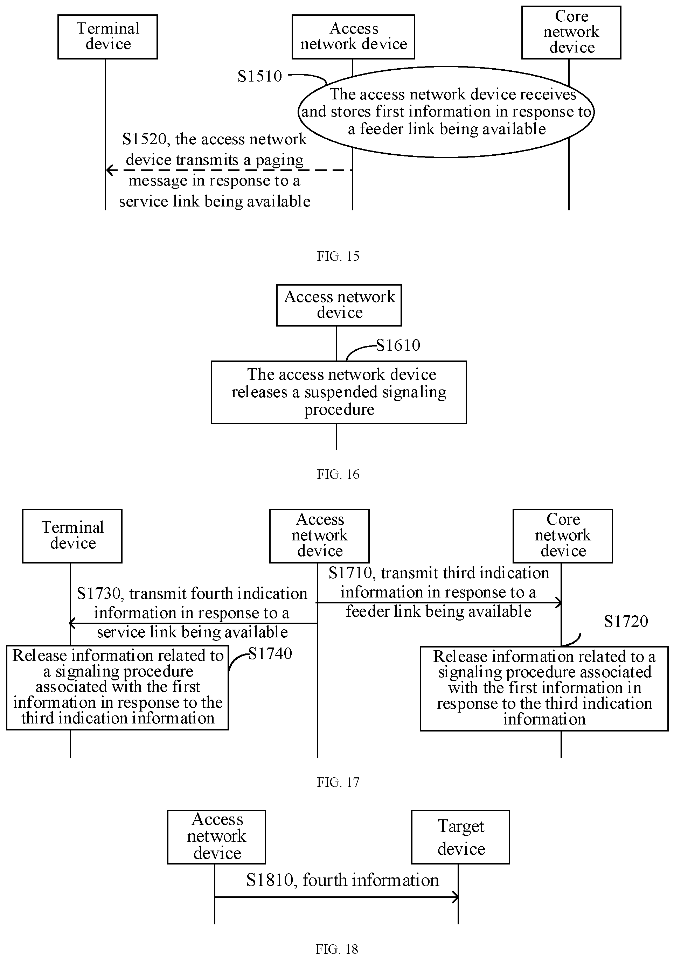

For ease of understanding, the wireless communication method in an embodiment of the present disclosure is introduced below with reference to FIG. 14 and FIG. 15. The method illustrated in FIG. 14 includes operations S1410 to S144**0**.

In operation S1410, in response to a feeder link being available, an access network device receives and stores first information transmitted by a core network device.

In operation S1420, in response to a service link being available, the access network device transmits a paging message to page a terminal device for receiving the first information.

In some implementations, the paging message may include an identifier of the terminal device, and the identifier of the terminal device may be one or more of: a SUPI, a SUCI, an PEI, a TMSI, a GUTI, a 5G-S-TMSI, a GUAMI, a RNTI, a C-RNTI, a I-RNTI, an access network device ID, a random number generated by the terminal device, or a random number generated by a RAN.

In some implementations, the above identifier may be a local identifier or an inherent identifier of the terminal device, or an identifier assigned to the terminal device by the access network device.

In some implementations, the paging message may include an association identifier of the first information and/or a suspending procedure resumption indication, or other information.

In operation S1430, in response to receiving the paging message, the terminal device transmits a first request to the access network device.

In some implementations, for the subsequent procedures of the terminal device, please refer to the method introduced above with reference to FIG. 11.

In operation S1440, in a case where the signaling procedure associated with the first information is successfully resumed, the terminal device receives the first information transmitted by the access network device.

FIG. 15 illustrates a wireless communication method in another embodiment of the present disclosure. The method illustrated in FIG. 15 includes operations S1510 to S1520.

In operation S1510, in response to a feeder link being available, an access network device receives and stores first information transmitted by a core network device.

In operation S1520, in response to a service link being available, the access network device transmits a paging message to page a terminal device for receiving the first information, where the paging message includes the first information.

In some implementations, the paging message may include an identifier of the terminal device, and the identifier of the terminal device may be one or more of: a SUPI, a SUCI, an PEI, a TMSI, a GUTI, a 5G-S-TMSI, a GUAMI, a RNTI, a C-RNTI, a I-RNTI, an access network device ID, a random number generated by the terminal device, or a random number generated by a RAN.

In some implementations, the above identifier may be a local identifier or an inherent identifier of the terminal device, or an identifier assigned to the terminal device by the access network device.

In some implementations, the paging message may include an association identifier of the first information and/or a suspending procedure resumption indication, or other information.

In some scenarios (e.g., in the store-and-forward mode), due to the motion of the satellite, the first link and the second link cannot remain continuously available until the signaling procedure associated with the first information is completed. At present, the communication protocols do not specify that, when the first link or the second link is unavailable, what operations various communication devices participating in the signaling procedure associated with the first information shall perform. In such the case, various communication devices may have different understandings, leading to an increased probability of the failure for the signaling procedure associated with the first information. Therefore, when the first link or the second link is unavailable, what operations various communication devices participating in the signaling procedure associated with the first information shall perform is an urgent problem to be solved.

To address the above problem, the embodiments of the present disclosure provide a wireless communication method. In this method, it is specified that when a first event occurs, various communication devices participating in the signaling procedure associated with the first information may release the suspended signaling procedure associated with the first information, which helps unify the operations of the various communication devices to improve the probability of the success for the signaling procedure associated with the first information. The flowchart of the wireless communication method according to an embodiment of the present disclosure is introduced below with reference to FIG. 16. The method illustrated in FIG. 16 includes operation S1610.

In operation S1610, an access network device releases a suspended signaling procedure, where the signaling procedure is associated with first information. The first information is transmitted via a communication link between a terminal device and a core network device, where the communication link includes a first link for communications between the access network device and the terminal device, and a second link for communications between the access network device and the core network device. Suspending of the signaling procedure is triggered based on unavailability of the first link or triggered based on unavailability of the second link.

In some implementations, the operation S1610 includes: the access network device deleting information associated with the signaling procedure; and/or the access network device releasing transmission resources for the signaling procedure.

The access network device deleting the information associated with the signaling procedure may include: the access network device deleting the first information and/or the access network device deleting an association identifier of the first information.

The access network device releasing the transmission resources for the signaling procedure helps to improve the utilization efficiency of the transmission resources.

It should be noted that the solution where a communication device participating in the signaling procedure associated with the first information release the suspended signaling procedure is introduced above by taking the access network device as an example. The communication device participating in the signaling procedure associated with the first information may further include a terminal device and/or a core network device. Accordingly, the solution where the terminal device and/or the core network device release the suspended signaling procedure is similar to the solution where the access network device releases the suspended signaling procedure, please refer to the above introduction.

In some implementations, releasing the suspended signaling procedure is triggered based on a first event, or in other words, in response to the first event, the communication device participating in the signaling procedure associated with the first information releases the signaling procedure associated with the first information.

In some implementations, in a case where the communication device is an access network device, the first event includes one or more of: a first timer expiring; receiving first indication information transmitted by the terminal device; or receiving second indication information transmitted by the core network device. Certainly, in the embodiments of the present disclosure, the communication device may also release the signaling procedure associated with the first information based on pre-configured information and pre-defined information.

For the example where the first event includes the first timer expiring, the first timer is used to determine a suspending time of the signaling procedure. In the embodiments of the present disclosure, the first timer may be configured by the access network device for the terminal device and/or core network device. Certainly, the first timer may be respectively configured for the communication devices participating in the signaling procedure of the first information through a pre-configured manner.

For the example where the first event includes receiving the first indication information transmitted by terminal device, the first indication information is used to indicate to release the signaling procedure associated with the first information.

For the example where the first event includes receiving the second indication information transmitted by core network device, the second indication information is used to indicate to release the signaling procedure associated with the first information.

In some implementations, in a case where the communication device is the terminal device or the core network device, the first event includes the first timer expiring, where the first timer is used to determine the suspending time of the signaling procedure. In the embodiments of the present disclosure, the first timer may be configured by the access network device for the terminal device and/or the core network device. Certainly, the first timer may be configured for the communication device participating in the signaling procedure of the first information in a pre-configured manner.

In some implementations, the above method further includes: the access network device transmitting third indication information to the core network device, where the third indication information is used to indicate a release of the signaling procedure by the access network device, or in other words, the third indication information is used to indicate that the access network device is prepared to release the signaling procedure associated with the first information or the access network device has released the signaling procedure associated with the first information.

In some implementations, after receiving the third indication information, the core network device may release the signaling procedure associated with the first information.

In some implementations, the third indication information includes one or more of: an identifier of the terminal device; information for indicating a release of the signaling procedure; or an association identifier of the first information. For the related introduction of the each piece of information, please refer to the above.

In some implementations, the method further includes: the access network device transmitting fourth indication information to the terminal device, where the fourth indication information is used to indicate the release of the signaling procedure by the access network device, or in other words, the fourth indication information is used to indicate that the access network device is prepared to release the signaling procedure associated with the first information or the access network device has released the signaling procedure associated with the first information.

In some implementations, the fourth indication information may be carried in a paging message to reduce the delay in transmitting the fourth information.

In some implementations, after receiving the fourth indication information, the terminal device may release the signaling procedure associated with the first information.

In some implementations, the fourth indication information includes one or more of: the identifier of the terminal device; the information for indicating the release of the signaling procedure; or the association identifier of the first information. For the related introduction of the each piece of information, please refer to the above.

A flowchart of the wireless communication method according to another embodiment of the present disclosure is introduced below with reference to FIG. 17. The method illustrated in FIG. 17 includes operations S1710 to S1740.

In operation S1710, in response to a feeder link being available, an access network device transmits third indication information to a core network device, where the third indication information is used to indicate a release of a signaling procedure by the access network device.

In some implementations, the third indication information includes at least one of: an identifier of a terminal device; an association identifier of first information; or a suspending procedure release indication.

In some implementations, the access network device also releases locally stored information related to the suspended signaling procedure associated with the first information, e.g., context of the terminal device, and the association identifier, etc.

In operation S1720, in response to the third indication information, the core network device releases the information related to the signaling procedure associated with the first information.

In operation S1730, in response to a service link being available, the access network device transmits fourth indication information to the terminal device via a paging message, where the fourth indication information is used to indicate a release of the signaling procedure by the access network device.

In some implementations, the fourth indication information includes at least one of: an identifier of the terminal device; an association identifier of the first information; or a suspending procedure release indication.

In operation S1740, in response to the fourth indication information, the terminal device releases the information related to the signaling procedure associated with the first information.

In some scenarios, the first link and the second link cannot be simultaneously available, and thus the signaling procedure associated with the first information that needs to be transmitted via both the first link and second link may be suspended. At present, the communication device participated in this signaling procedure cannot determine how to resume the signaling procedure associated with the first information.

To address the above problem, the embodiments of the present disclosure further provide a wireless communication method. In this method, the access network device may transmit fourth information to a target device, so that the target device is enabled to establish a connection with an access network device based on the fourth information, so as to resume the signaling procedure associated with the first information. The wireless communication method according to the embodiments of the present disclosure is described below with reference to FIG. 18. The method illustrated in FIG. 18 includes operation S1810.

In operation S1810, the access network device transmits the fourth information to the target device. The fourth information is associated with first information, where the first information is transmitted via a communication link between a terminal device and a core network device. The communication link includes a first link and a second link, where the target device includes the terminal device and/or the core network device. For related explanations of terms, such as the first information, the first link and second link, please refer to the above introduction.

In some implementations, in a case where the target device is the terminal device, the fourth information includes one or more of: an identifier of the terminal device; area information where the first link is available; information for indicating an available time of the first link; information for indicating an available time of the second link; a time for indicating the terminal device to re-establish a connection with the access network device; or information for indicating that the access network device is in a store-and-forward mode.

It should be noted that, for the related content of information carried in the fourth information, please refer to the above introduction of the response message for the first information, which will not be repeated here for brevity.

In some implementations, in a case where the target device is the core network device, the fourth information includes one or more of: the identifier of the terminal device; or the information for indicating that the access network device is in the store-and-forward mode.

It should be noted that, for the related content of the information carried in the fourth information, please refer to the above introduction of the response message for the first information, which will not be repeated here for brevity. In some scenarios, the fourth information may be the response message for the first information, and in this case, the above introduction related to the first information may all apply to the fourth information. In other scenarios, the fourth information is different from the response message for the first information, and in this case, the fourth information may not be the response message for the first information. In this case, for the related explanations of the meanings of the above information carried in the fourth information, please refer to the response message for the first information introduced above.

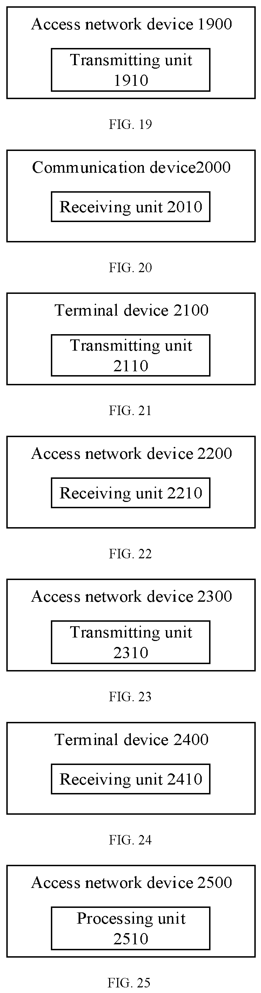

The method embodiments of the present disclosure are described specifically above with reference to FIG. 1 to FIG. 18. The apparatus embodiments of the present disclosure are described specifically below with reference to FIG. 19 to FIG. 30. It should be understood that the descriptions of the method embodiments and the apparatus embodiments correspond to each other, and therefore, for parts not described specifically, please refer to the above method embodiments.

FIG. 19 is a schematic diagram of an access network device according to an embodiment of the present disclosure. The access network device 1900 illustrated in FIG. 19 includes a transmitting unit 1910.

The transmitting unit 1910 is configured to transmit an association identifier of first information to a target device. The association identifier is used to associate the first information transmitted via a first link with the first information transmitted via a second link, and/or the association identifier is used to associate the first information with other information, the other information being information transmitted in a signaling procedure associated with the first information, other than the first information. The target device includes a terminal device and/or a core network device.

In some implementations, the transmitting unit is configured to: in response to receiving the first information transmitted by the target device, transmit a response message to the target device for the first information, the response message for the first information carrying the association identifier of the first information.

In some implementations, the target device is the terminal device, and the response message for the first information includes one or more of: an identifier of the terminal device; area information where the first link is available; information for indicating an acknowledgment of a reception of the first information; information for indicating an availability time of the first link; information for indicating an availability time of the second link; a time for indicating the terminal device to re-establish a connection with the access network device; or information for indicating that the access network device is in a store-and-forward mode.

In some implementations, the target device is the terminal device, and the access network device further includes: a first receiving unit, configured to receive second information transmitted by the terminal device. The second information includes one or more of: mobility information of the terminal device; a time when the terminal device is in an area where the first link is available; a time by which the terminal device expects the signaling procedure associated with the first information to be completed; or a time when the terminal device re-accesses the access network device after disconnecting from the access network device.

In some implementations, the time when the terminal device is in the area where the first link is available includes: a time when the terminal device re-enters the area after leaving the area; and/or a duration during which the terminal device is located in the area.

In some implementations, the target device is the terminal device, and the transmitting unit is configured to: transmit the first information to the core network device via the second link, in a case where the second link is available.

In some implementations, the target device is the core network device, and the response message for the first information includes one or more of: an identifier of the terminal device; information for indicating an acknowledgement of a reception of the first information; or information for indicating that the access network device is in a store-and-forward mode.

In some implementations, the target device is the core network device, and the access network device further includes: a second receiving unit, configured to receive third information transmitted by the core network device. The third information includes an identifier of the terminal device and/or an availability time of the second link.

In some implementations, in a case where the third information includes the availability time of the second link, the availability time of the second link includes a time, subsequent to transmitting the third information, when a connection of the second link is resumed after being disconnected.

In some implementations, the target device is the core network device, and the transmitting unit is configured to: transmit the first information to the terminal device via the first link in a case where the first link is available.

In some implementations, the access network device further includes: a processing unit, configured to: in response to receiving the first information, perform one or more of: storing the first information; storing context information of the terminal device; or suspending the signaling procedure associated with the first information.

In some implementations, the first link is a service link for communications between the access network device and the terminal device, and/or the second link is a feeder link for communications between the access network device and the core network device.

FIG. 20 is a schematic diagram of a communication device according to an embodiment of the present disclosure. The communication device 2000 illustrated in FIG. 20 is a target device and includes a receiving unit 2010.

The receiving unit 2010 is configured to receive an association identifier of first information transmitted by an access network device, where the first information is transmitted via a first link and a second link. The association identifier is used to associate the first information transmitted via the first link with the first information transmitted via the second link, and/or the association identifier is used to associate the first information with other information, the other information being information transmitted in a signaling procedure associated with the first information, other than the first information. The target device includes a terminal device and/or a core network device.

In some implementations, the communication device includes: a first transmitting unit, configured to transmit the first information to the access network device; where the receiving unit is configured to: in response to transmitting the first information, receive a response message transmitted by the access network device for the first information, the response message for the first information carrying the association identifier of the first information.

In some implementations, the target device is the terminal device, and the response message for the first information includes one or more of: an identifier of the terminal device; area information where the first link is available; information for indicating an acknowledgment of a reception of the first information; information for indicating an available time of the first link; information for indicating an available time of the second link; a time for indicating the terminal device to re-establish a connection with the access network device; or information for indicating that the access network device is in a store-and-forward mode.

In some implementations, the target device is the terminal device, and the communication device further includes: a second transmitting unit, configured to transmit second information to the access network device. The second information includes one or more of: mobility information of the terminal device; a time when the terminal device is in an area where the first link is available; a time by which the terminal device expects the signaling procedure associated with the first information to be completed; or a time when the terminal device re-accesses the access network device after disconnecting from the access network device.

In some implementations, the time when the terminal device is in the area where the first link is available includes: a time when the terminal device re-enters the area after leaving the area; and/or a duration during which the terminal device is located in the area.

In some implementations, the target device is the terminal device, and the communication device further includes a first processing unit, configured to: suspend the signaling procedure associated with the first information, in response to receiving the response message for the first information.

In some implementations, the target device is the core network device, and the response message for the first information includes one or more of: an identifier of the terminal device; information for indicating an acknowledgment of a reception of the first information; or information for indicating that the access network device is in a store-and-forward mode.

In some implementations, the target device is the core network device, and the communication device further includes: a third transmitting unit, configured to: transmit third information to the access network device, the third information comprising an identifier of the terminal device, and/or an available time of the second link.

In some implementations, the available time of the second link includes a time when a connection of the second link for transmitting the third information is resumed after being disconnected.

In some implementations, the target device is the core network device, and the communication device further includes: a second processing unit, configured to: suspend the signaling procedure associated with the first information, in response to receiving a response message for the first information.

In some implementations, the first link is a service link for communications between the access network device and the terminal device, and/or the second link is a feeder link for communications between the access network device and the core network device.

FIG. 21 is a schematic diagram of a terminal device according to an embodiment of the present disclosure. The terminal device 2100 illustrated in FIG. 21 includes a transmitting unit 2110.

The transmitting unit 2110 is configured to transmit a first request to an access network device, the first request being used to request resuming a signaling procedure associated with first information. The first information is transmitted via a first link and a second link. Suspending of the signaling procedure associated with the first information is triggered based on unavailability of the first link, or suspending of the signaling procedure associated with the first information is triggered based on unavailability of the second link.

In some implementations, the transmitting unit is configured to: transmit the first request to the access network device within an available time of the first link.

In some implementations, the available time of the first link is determined based on one or more of: a first timer; or ephemeris information of a satellite where the access network device is located.

In some implementations, the first request includes one or more of: an identifier of the terminal device; mobility information of the terminal device; information for indicating to resume the signaling procedure associated with the first information; or an association identifier of the first information. The association identifier is used to associate the first information transmitted via the first link with the first information transmitted via the second link, and/or the association identifier is used to associate the first information with other information, the other information being information transmitted in the signaling procedure associated with the first information, other than the first information.

In some implementations, the terminal device further includes a first receiving unit, configured to receive a response message transmitted by the access network device for the first request, the response message for the first request being used to indicate that the signaling procedure associated with the first information is successfully resumed.

In some implementations, the response message for the first request carries the first information.

In some implementations, the terminal device further includes: a second receiving unit, configured to receive a response message transmitted by the access network device for the first request, the response message for the first request being used to indicate that the signaling procedure associated with the first information fails to be resumed.

In some implementations, the response message for the first request includes one or more of: an identifier of the terminal device; information for indicating a failure to resume the signaling procedure associated with the first information; information for indicating a reason for a failure to resume the signaling procedure associated with the first information; information for indicating an available time of the first link after a failure to resume the signaling procedure; information for indicating an available time of the second link after a failure to resume the signaling procedure; a second timer, the second timer being used to determine a time for the terminal device to retransmit the first request; or an association identifier of the first information. The association identifier is used to associate the first information transmitted via the first link with the first information transmitted via the second link, and/or the association identifier is used to associate the first information with other information, the other information being information transmitted in the signaling procedure associated with the first information, other than the first information.

In some implementations, in a case where the response message for the first request includes the information for indicating the reason for the failure to resume the signaling procedure associated with the first information, the reason for the failure to resume the signaling procedure associated with the first information includes one or more of: the first information being not stored in the access network device; or the first information transmitted by a core network device being not received by the access network device.

In some implementations, the terminal device includes a processing unit, configured to: in response to a failure to resume the signaling procedure associated with the first information, perform one of following operations: releasing the signaling procedure associated with the first information; and starting a second timer, the second timer being used to determine a time for the terminal device to retransmit the first request.

FIG. 22 is a schematic diagram of an access network device according to an embodiment of the present disclosure. The access network device 2200 illustrated in FIG. 22 includes a receiving unit 2210.

The receiving unit 2210 is configured to receive a first request transmitted by a terminal device, the first request being used to request resuming a signaling procedure associated with first information. The first information is transmitted via a first link and a second link. Suspending of the signaling procedure associated with the first information is triggered based on unavailability of the first link, or suspending of the signaling procedure associated with the first information is triggered based on unavailability of the second link.

In some implementations, the receiving unit is configured to: receive the first request transmitted by the terminal device within an available time of the first link.

In some implementations, the available time of the first link is determined based on one or more of: a first timer; or ephemeris information of a satellite where the access network device is located.

In some implementations, the first request includes one or more of: an identifier of the terminal device; mobility information of the terminal device; information for indicating to resume the signaling procedure associated with the first information; or an association identifier of the first information. The association identifier is used to associate the first information transmitted via the first link with the first information transmitted via the second link, and/or the association identifier is used to associate the first information with other information, the other information being information transmitted in the signaling procedure associated with the first information, other than the first information.

In some implementations, the access network device further includes: a first transmitting unit, configured to transmit a response message to the terminal device for the first request, the response message for the first request being used to indicate that the signaling procedure associated with the first information is successfully resumed.

In some implementations, the response message for the first request carries the first information.

In some implementations, the access network device further includes: a second transmitting unit, configured to transmit a response message to the terminal device for the first request, the response message for the first request being used to indicate that the signaling procedure associated with the first information fails to be resumed.

In some implementations, the response message for the first request includes one or more of: an identifier of the terminal device; information for indicating a failure to resume the signaling procedure associated with the first information; information for indicating a reason for a failure to resume the signaling procedure associated with the first information; information for indicating an available time of the first link after a failure to resume the signaling procedure; information for indicating an available time of the second link after a failure to resume the signaling procedure; a second timer, the second timer being used to determine a time for the terminal device to retransmit the first request; or an association identifier of the first information. The association identifier is used to associate the first information transmitted via the first link with the first information transmitted via the second link, and/or the association identifier is used to associate the first information with other information, the other information being information transmitted in the signaling procedure associated with the first information, other than the first information.

In some implementations, in a case where the response message for the first request includes the information for indicating the reason for the failure to resume the signaling procedure associated with the first information, the reason for the failure to resume the signaling procedure associated with the first information includes one or more of: the first information being not stored in the access network device; or the first information transmitted by a core network device being not received by the access network device.

FIG. 23 is a schematic diagram of an access network device according to an embodiment of the present disclosure. The access network device 2300 illustrated in FIG. 23 includes a transmitting unit 2310.

The transmitting unit 2310 is configured to: transmit a paging message in response to a first link being available, the paging message being used to page a terminal device that receives first information. The first information is transmitted via the first link and a second link, the first link being for communications between an access network device and the terminal device, and the second link being for communications between the access network device and a core network device.

In some implementations, the paging message includes one or more of: the first information; an identifier of the terminal device; information for indicating to resume a signaling procedure associated with the first information; or an association identifier of the first information. The association identifier being used to associate the first information transmitted via the first link with the first information transmitted via the second link, and/or the association identifier is used to associate the first information with other information, the other information being information transmitted in the signaling procedure associated with the first information, other than the first information.

In some implementations, the access network device further includes a receiving unit, configured to: receive a first request transmitted by the terminal device in response to transmitting the paging message, the first request being used to request resuming a signaling procedure associated with the first information.

FIG. 24 is a schematic diagram of a terminal device according to an embodiment of the present disclosure. The terminal device 2400 illustrated in FIG. 24 includes a receiving unit 2410.

The receiving unit 2410 is configured to: receive a paging message transmitted by an access network device in response to a first link being available, the paging message being used to page the terminal device to receive first information. The first information is transmitted via the first link and a second link, where the first link is a link for communications between the access network device and the terminal device, and the second link is a link for communications between the access network device and a core network device.

In some implementations, the paging message includes one or more of: the first information; an identifier of the terminal device; information for indicating to resume a signaling procedure associated with the first information; or an association identifier of the first information. The association identifier is used to associate the first information transmitted via the first link with the first information transmitted via the second link, and/or the association identifier is used to associate the first information with other information, the other information being information transmitted in the signaling procedure associated with the first information, other than the first information.

In some implementations, the terminal device further includes a transmitting unit, configured to: transmit a first request to the access network device in response to the paging message, the first request being used to request resuming a signaling procedure associated with the first information.

FIG. 25 is a schematic diagram of an access network device according to an embodiment of the present disclosure. The access network device 2500 illustrated in FIG. 25 includes a processing unit 2510.

The processing unit 2510 is configured to release a suspended signaling procedure, where the signaling procedure is associated with first information, and the first information is transmitted via a first link and a second link. The first link is for communications between the access network device and a terminal device, and the second link is for communications between the access network device and a core network device. Suspending of the signaling procedure is triggered based on unavailability of the first link or triggered based on unavailability of the second link.

In some implementations, the processing unit is configured to release the suspended signaling procedure in response to a first event, where the first event includes one or more of: a first timer expiring, the first timer being used to determine a suspending time of the signaling procedure; receiving first indication information transmitted by the terminal device, the first indication information being used to indicate to release the signaling procedure; or receiving second indication information transmitted by the core network device, the second indication information being used to indicate to release the signaling procedure.

In some implementations, the access network device further includes: a first transmitting unit, configured to transmit third indication information to the core network device, the third indication information being used to indicate a release of the signaling procedure by the access network device.

In some implementations, the third indication information includes one or more of: an identifier of the terminal device; information for indicating the release of the signaling procedure; or an association identifier of the first information. The association identifier is used to associate the first information transmitted via the first link with the first information transmitted via the second link, and/or the association identifier is used to associate the first information with other information, the other information being information transmitted in the signaling procedure associated with the first information, other than the first information.

In some implementations, the access network device further includes a second transmitting unit, configured to transmit fourth indication information to the terminal device, the fourth indication information being used to indicate a release of the signaling procedure by the access network device.

In some implementations, the fourth indication information includes one or more of: an identifier of the terminal device; information for indicating the release of the signaling procedure; or an association identifier of the first information. The association identifier is used to associate the first information transmitted via the first link with the first information transmitted via the second link, and/or the association identifier is used to associate the first information with other information, the other information being information transmitted in the signaling procedure associated with the first information, other than the first information.

In some implementations, the processing unit is configured to: delete information associated with the signaling procedure; and/or release transmission resources for the signaling procedure.

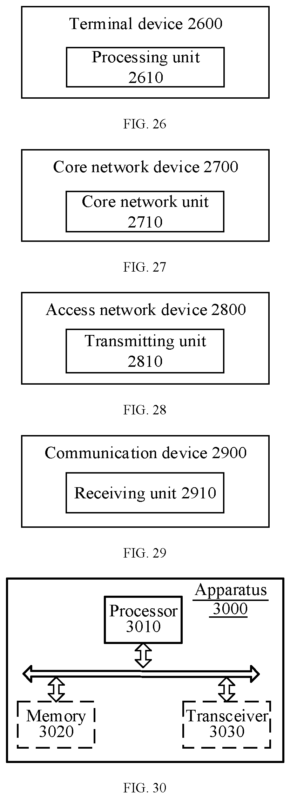

FIG. 26 is a schematic diagram of a terminal device according to an embodiment of the present disclosure. The terminal device 2600 illustrated in FIG. 26 includes a processing unit 2610.

The processing unit 2610 is configured to release a suspended signaling procedure, where the signaling procedure is associated with first information, and the first information is transmitted via a first link and a second link. The first link is for communications between an access network device and the terminal device, the second link is for communications between the access network device and a core network device. Suspending of the signaling procedure is triggered based on unavailability of the first link or triggered based on unavailability of the second link.

In some implementations, the processing unit is configured to: release the suspended signaling procedure in response to a first event, where the first event includes a first timer expiring, the first timer being used to determine a suspending time of the signaling procedure.

In some implementations, the terminal device further includes: a first receiving unit, configured to receive fourth indication information transmitted by the access network device, the fourth indication information being used to indicate a release of the signaling procedure by the access network device.

In some implementations, the fourth indication information includes one or more of: an identifier of the terminal device; information for indicating the release of the signaling procedure; or an association identifier of the first information. The association identifier is used to associate the first information transmitted via the first link with the first information transmitted via the second link, and/or the association identifier is used to associate the first information with other information, the other information being information transmitted in the signaling procedure associated with the first information, other than the first information.

In some implementations, the processing unit is configured to: release the signaling procedure in response to the fourth indication information.

In some implementations, the processing unit is configured to: delete information associated with the signaling procedure; and/or release transmission resources for the signaling procedure.

FIG. 27 is a schematic diagram of a core network device according to an embodiment of the present disclosure. The core network device 2700 illustrated in FIG. 27 includes a processing unit 2710.

The processing unit 2710 is configured to release a suspended signaling procedure, where the signaling procedure is associated with first information, and the first information is transmitted via a first link and a second link. The first link is for communications between an access network device and a terminal device, and the second link is for communications between the access network device and a core network device. Suspending of the signaling procedure is triggered based on unavailability of the first link or triggered based on unavailability of the second link.

In some implementations, the processing unit is configured to release the suspended signaling procedure in response to a first event, where the first event includes a first timer expiring, the first timer being used to determine a suspending time of the signaling procedure.

In some implementations, the core network device further includes: a first receiving unit, configured to receive third indication information transmitted by the access network device, the third indication information being used to indicate a release of the signaling procedure by the access network device.

In some implementations, the third indication information includes one or more of: an identifier of the terminal device; information for indicating the release of the signaling procedure; or an association identifier of the first information. The association identifier is used to associate the first information transmitted via the first link with the first information transmitted via the second link, and/or the association identifier is used to associate the first information with other information, the other information being information transmitted in the signaling procedure associated with the first information, other than the first information.

In some implementations, the processing unit is configured to: release the signaling procedure in response to the third indication information.

In some implementations, the processing unit is configured to: delete information associated with the signaling procedure; and/or release transmission resources for the signaling procedure.

FIG. 28 is a schematic diagram of an access network device in an embodiment of the present disclosure. The access network device 2800 illustrated in FIG. 28 includes a transmitting unit 2810.

The transmitting unit 2810 is configured to transmit fourth information to a target device, the fourth information being associated with first information, and the first information being transmitted via a first link and a second link. The target device includes a terminal device and/or a core network device.

In some implementations, the target device is the terminal device, and the fourth information includes one or more of: an identifier of the terminal device; area information where the first link is available; information for indicating an available time of the first link; information for indicating an available time of the second link; a time for indicating the terminal device to re-establish a connection with the access network device; or information for indicating that the access network device is in a store-and-forward mode.

In some implementations, the target device is the core network device, and the fourth information includes one or more of: an identifier of the terminal device; or information for indicating that the access network device is in a store-and-forward mode.

FIG. 29 is a schematic diagram of a communication device in an embodiment of the present disclosure. The communication device 2900 illustrated in FIG. 29 is a target device and the communication device 2900 includes a receiving unit 2910.

The receiving unit 2910 is configured to receive fourth information transmitted by an access network device, the fourth information being associated with first information, and the first information being transmitted via a first link and a second link, where the target device includes a terminal device and/or a core network device.

In some implementations, the target device is the terminal device, and the fourth information includes one or more of: an identifier of the terminal device; area information where the first link is available; information for indicating an available time of the first link; information for indicating an available time of the second link; a time for indicating the terminal device to re-establish a connection with the access network device; or information for indicating that the access network device is in a store-and-forward mode.

In some implementations, the target device is the core network device, and the fourth information includes one or more of: an identifier of the terminal device; or information for indicating that the access network device is in a store-and-forward mode.

FIG. 30 is a schematic diagram of a communication apparatus according to the embodiments of the present disclosure. The dashed lines in FIG. 30 indicate that a unit or module is optional. An apparatus 3000 may be used to implement the method described in the above method embodiments. The apparatus 3000 may be a chip, a terminal device or a network device.

The apparatus 3000 may include one or more processors 3010. The processor 3010 may support the apparatus 3000 to implement the method described in the above method embodiments. The processor 3010 may be a general-purpose processor or a dedicated-purpose processor. For example, the processor may be a central processing unit (CPU). Alternatively, the processor may be other general-purpose processors, a digital signal processor (DSP), an application specific integrated circuit (ASIC), a field programmable gate array (FPGA) or other programmable logic devices, discrete gates or transistor logic devices, discrete hardware components, etc. The general-purpose processor may be a microprocessor, or the processor may be any conventional processor or the like.

The apparatus 3000 may further include one or more memories 3020. The memory 3020 stores a program thereon, and the program may be executed by the processor 3010, to enable the processor 3010 to perform the method in the above method embodiments of the present disclosure. The memory 3020 may be independent of the processor 3010, or may be integrated into the processor 3010.

The apparatus 3000 may further include a transceiver 3030. The processor 3010 may communicate with other devices or chips via the transceiver 3030. For example, the processor 3010 may transmit and receive data with other devices or chips via the transceiver 3030.

The embodiments of the present disclosure further provide a computer-readable storage medium for storing a program. The computer-readable storage medium may be applied to the terminal or the network device provided in the embodiments of the present disclosure, and the program enables a computer to perform the method performed by the terminal or the network device in various embodiments of the present disclosure.

The embodiments of the present disclosure further provide a computer program product. The computer program product includes a program. The computer program product may be applied to the terminal or the network device provided in the embodiments of the present disclosure, and the program enables a computer to perform the method performed by the terminal or the network device in various embodiments of the present disclosure.

The embodiments of the present disclosure further provide a computer program. The computer program may be applied to the terminal or the network device provided in the embodiments of the present disclosure, and the computer program enables a computer to perform the method performed by the terminal or the network device in various embodiments of the present disclosure.

It should be understood that the terms "system" and "network" may be used interchangeably in the present disclosure. In addition, the terms used in the present disclosure are only used to explain the specific embodiments of the present disclosure and are not intended to limit the present disclosure. The terms "first," "second," "third," "fourth" and the like in the specification, claims and drawings of the present disclosure are used to distinguish different objects rather than to describe a specific order. In addition, the terms "includes/comprises," "has," and any variations thereof, are intended to cover a non-exclusive inclusion.

In the embodiments of the present disclosure, the term "indicate/indicated/indicating/indication" mentioned may be a direct indication, may also be an indirect indication, or may mean that there is an association relationship. For example, A indicating B may mean that A directly indicates B, for example, B may be obtained by A; alternatively, A indicating B may mean that A indirectly indicates B, for example, A indicates C, and B may be obtained by C; alternatively, A indicating B may mean that there is an association relationship between A and B.

In the embodiments of the present disclosure, "B corresponding to A" means that B is associated with A, and B can be determined based on A. However, it should also be understood that determining B based on A does not mean determining B based solely based on A. B may also be determined based on A and/or other information.

In the embodiments of the present disclosure, the term "correspond/corresponding/correspondence" may mean that there is a direct or indirect correspondence between two elements, may also mean that there is an associated relationship between the two elements, or may also mean a relationship of indicating and being indicated or a relationship of configuring and being configured, etc.

In the embodiments of the present disclosure, "pre-defined" or "pre-configured" may be implemented by pre-saving corresponding codes, tables or other manners that may be used to indicate related information in devices (e.g., including a terminal device and a network device), and a specific implementation manner thereof is not limited in the present disclosure. For example, the pre-defined may refer to what is defined in a protocol.

In the embodiments of the present disclosure, the "protocol" may refer to a standard protocol in the communication field. For example, the "protocol" may include an LTE protocol, an NR protocol, and a related protocol used in a future communication system, which is not limited in the present disclosure.

In the embodiments of the present disclosure, the term "and/or" herein is only an association relationship to describe associated objects, which indicates that there may be three kinds of relationships. For example, "A and/or B" may mean three cases where: A exists alone, both A and B exist, and B exists alone. In addition, a character "/" herein generally means that associated objects before and after "/" are in an "or" relationship.

In various embodiments of the present disclosure, values of serial numbers of the processes do not mean the order of execution. The execution order of each process should be determined by its function and internal logic, and should not constitute any limitation on the implementation process of the embodiments of the present disclosure.

In several embodiments provided in the present disclosure, it should be understood that the disclosed systems, apparatuses, and methods may be implemented in other manners. For example, the apparatus embodiments described above are merely exemplary. For example, a division of units is merely a division based on a logical function and there may be other division manners in actual implementations. For example, multiple units or components may be combined or integrated into another system, or some characteristics may be omitted or not be performed. In addition, coupling, direct coupling or communication connection between each other displayed or discussed may be indirect coupling or communication connection via some interfaces, apparatuses or units, which may be electrical, mechanical or in other forms.

The units described as separate components may be or may not be physically separated, and the components displayed as units may be or may not be physical units. That is, they may be located in a place or distributed over multiple network units. Some or all of the units may be selected according to actual needs to achieve the purpose of the solutions of the embodiments.

In addition, various function units in various embodiments of the present disclosure may be integrated into one processing unit, or various units may exist physically separately, or two or more units may be integrated into one unit.

All or some of the above embodiments may be implemented by software, hardware, firmware or any combination thereof. When implemented using software, all or some of the embodiments may be implemented in the form of a computer program product. The computer program product includes one or more computer instructions. When the computer program instructions are loaded and executed on a computer, all or some procedures or functions described in the embodiments of the present disclosure are generated. The computer may be a general-purpose computer, a dedicated-purpose computer, a computer network, or other programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center via a wired manner (e.g., a coaxial cable, an optical fiber, a digital subscriber line (DSL)) or a wireless manner (e.g., an infrared or radio manner, microwave, etc.). The computer-readable storage medium may be any available medium that may be read by a computer or a data storage device such as a server or a data center that includes one or more available medium. The available medium may be a magnetic medium (e.g., a floppy disk, a hard disk, a magnetic tape), an optical medium (e.g., digital versatile disc (a digital video disc, DVD)), or a semiconductor medium (e.g., a solid state disk (SSD)).

The above description is only specific implementations of the present disclosure, but the protection scope of the present disclosure is not limited thereto. Any person skilled in the art familiar with the technical field may easily think of changes or substitutions within the technical scope disclosed in the present disclosure, all of which should be included in the protection scope of the present disclosure. Therefore, the protection scope of the present disclosure shall be subject to the protection scope of the claims.

## Claims

1. A wireless communication method, comprising:
transmitting, by an access network device, an association identifier of first information to a target device,
wherein the association identifier is used to associate the first information transmitted via a first link with the first information transmitted via a second link; and/or
the association identifier is used to associate the first information with other information, the other information being information transmitted in a signaling procedure associated with the first information, other than the first information;
wherein the target device comprises a terminal device and/or a core network device.

2. The method according to claim 1, wherein transmitting, by the access network device, the association identifier of the first information to the target device comprises:
in response to receiving the first information transmitted by the target device, transmitting, by the access network device, a response message to the target device for the first information, the response message for the first information carrying the association identifier of the first information.

3. The method according to claim 2, wherein the target device is the terminal device, and the response message for the first information comprises one or more of:
an identifier of the terminal device;
area information where the first link is available;
information for indicating an acknowledgment of a reception of the first information;
information for indicating an availability time of the first link;
information for indicating an availability time of the second link;
a time for indicating the terminal device to re-establish a connection with the access network device; or
information for indicating that the access network device is in a store-and-forward mode.

4. The method according to any one of claims 1 to 3, wherein the target device is the terminal device, and the method further comprises:
receiving, by the access network device, second information transmitted by the terminal device, the second information comprising one or more of:
mobility information of the terminal device;
a time when the terminal device is in an area where the first link is available;
a time by which the terminal device expects the signaling procedure associated with the first information to be completed; or
a time when the terminal device re-accesses the access network device after disconnecting from the access network device.

5. The method according to claim 4, wherein the time when the terminal device is in the area where the first link is available comprises: a time when the terminal device re-enters the area after leaving the area; and/or
a duration during which the terminal device is located in the area.

6. The method according to any one of claims 1 to 5, wherein the target device is the terminal device, and the method further comprises:
in a case where the second link is available, transmitting, by the access network device, the first information to the core network device via the second link.

7. The method according to claim 2, wherein the target device is the core network device, and the response message for the first information comprises one or more of:
an identifier of the terminal device;
information for indicating an acknowledgement of a reception of the first information; or
information for indicating that the access network device is in a store-and-forward mode.

8. The method according to any one of claims 1, 2, and 7, wherein the target device is the core network device, and the method further comprises:
receiving, by the access network device, third information transmitted by the core network device, the third information comprising an identifier of the terminal device, and/or an availability time of the second link.

9. The method according to claim 8, wherein in a case where the third information comprises the availability time of the second link, the availability time of the second link comprises a time, subsequent to transmitting the third information, when a connection of the second link is resumed after being disconnected.

10. The method according to any one of claims 1, 2, and 7 to 9, wherein the target device is the core network device, and the method further comprises:
in a case where the first link is available, transmitting, by the access network device, the first information to the terminal device via the first link.

11. The method according to any one of claims 1 to 10, wherein the method further comprises:
in response to receiving the first information, performing, by the access network device, one or more of:
storing the first information;
storing context information of the terminal device; or
suspending the signaling procedure associated with the first information.

12. The method according to any one of claims 1 to 11, wherein the first link is a service link for communications between the access network device and the terminal device, and/or
the second link is a feeder link for communications between the access network device and the core network device.

13. A wireless communication method, comprising:
receiving, by a target device, an association identifier of first information transmitted by an access network device,
wherein the association identifier is used to associate the first information transmitted via a first link with the first information transmitted via a second link; and/or
the association identifier is used to associate the first information with other information, the other information being information transmitted in a signaling procedure associated with the first information, other than the first information;
wherein the target device comprises a terminal device and/or a core network device.

14. The method according to claim 13, comprising:
transmitting, by the target device, the first information to the access network device;
wherein receiving, by the target device, the association identifier of the first information transmitted by the access network device comprises:
in response to transmitting the first information, receiving, by the target device, a response message transmitted by the access network device for the first information, the response message for the first information carrying the association identifier of the first information.

15. The method according to claim 14, wherein the target device is the terminal device, and the response message for the first information comprises one or more of:
an identifier of the terminal device;
area information where the first link is available;
information for indicating an acknowledgment of a reception of the first information;
information for indicating an available time of the first link;
information for indicating an available time of the second link;
a time for indicating the terminal device to re-establish a connection with the access network device; or
information for indicating that the access network device is in a store-and-forward mode.

16. The method according to any one of claims 13 to 15, wherein the target device is the terminal device, and the method further comprises:
transmitting, by the terminal device, second information to the access network device, the second information comprising one or more of:
mobility information of the terminal device;
a time when the terminal device is in an area where the first link is available;
a time by which the terminal device expects the signaling procedure associated with the first information to be completed; or
a time when the terminal device re-accesses the access network device after disconnecting from the access network device.

17. The method according to claim 16, wherein the time when the terminal device is in the area where the first link is available comprises: a time when the terminal device re-enters the area after leaving the area; and/or
a duration during which the terminal device is located in the area.

18. The method according to any one of claims 13 to 17, wherein the target device is the terminal device, and the method further comprises:
in response to receiving the response message for the first information, suspending, by the terminal device, the signaling procedure associated with the first information.

19. The method according to claim 14, wherein the target device is the core network device, and the response message for the first information comprises one or more of:
an identifier of the terminal device;
information for indicating an acknowledgment of a reception of the first information; or
information for indicating that the access network device is in a store-and-forward mode.

20. The method according to any one of claims 13, 14, and 19, wherein the target device is the core network device, and the method further comprises:
transmitting, by the core network device, third information to the access network device, the third information comprising an identifier of the terminal device, and/or an available time of the second link.

21. The method according to claim 20, wherein the available time of the second link comprises a time when a connection of the second link for transmitting the third information is resumed after being disconnected.

22. The method according to any one of claims 13, 14, and 19 to 21, wherein the target device is the core network device, and the method further comprises:
in response to receiving a response message for the first information, suspending, by the core network device, the signaling procedure associated with the first information.

23. The method according to any one of claims 13 to 22, wherein the first link is a service link for communications between the access network device and the terminal device, and/or
the second link is a feeder link for communications between the access network device and the core network device.

24. A wireless communication method, comprising:
transmitting, by a terminal device, a first request to an access network device, the first request being used to request resuming a signaling procedure associated with first information,
wherein the first information is transmitted via a first link and a second link,
wherein suspending of the signaling procedure associated with the first information is triggered based on unavailability of the first link, or suspending of the signaling procedure associated with the first information is triggered based on unavailability of the second link.

25. The method according to claim 24, wherein transmitting, by the terminal device, the first request to the access network device comprises:
transmitting, by the terminal device, the first request to the access network device within an available time of the first link.

26. The method according to claim 25, wherein the available time of the first link is determined based on one or more of:
a first timer; or
ephemeris information of a satellite where the access network device is located.

27. The method according to any one of claims 24 to 26, wherein the first request comprises one or more of:
an identifier of the terminal device;
mobility information of the terminal device;
information for indicating to resume the signaling procedure associated with the first information; or
an association identifier of the first information, the association identifier being used to associate the first information transmitted via the first link with the first information transmitted via the second link.

28. The method according to any one of claims 24 to 27, further comprising:
receiving, by the terminal device, a response message transmitted by the access network device for the first request, the response message for the first request being used to indicate that the signaling procedure associated with the first information is successfully resumed.

29. The method according to claim 28, wherein the response message for the first request carries the first information.

30. The method according to any one of claims 24 to 27, further comprising:
receiving, by the terminal device, a response message transmitted by the access network device for the first request, the response message for the first request being used to indicate that the signaling procedure associated with the first information fails to be resumed.

31. The method according to claim 30, wherein the response message for the first request comprises one or more of:
an identifier of the terminal device;
information for indicating a failure to resume the signaling procedure associated with the first information;
information for indicating a reason for a failure to resume the signaling procedure associated with the first information;
information for indicating an available time of the first link after a failure to resume the signaling procedure;
information for indicating an available time of the second link after a failure to resume the signaling procedure;
a second timer, the second timer being used to determine a time for the terminal device to retransmit the first request; or
an association identifier of the first information,
wherein the association identifier is used to associate the first information transmitted via the first link with the first information transmitted via the second link, and/or
the association identifier is used to associate the first information with other information, the other information being information transmitted in the signaling procedure associated with the first information, other than the first information.

32. The method according to claim 31, wherein in a case where the response message for the first request comprises the information for indicating the reason for the failure to resume the signaling procedure associated with the first information, the reason for the failure to resume the signaling procedure associated with the first information comprises one or more of:
the first information being not stored in the access network device; or
the first information transmitted by a core network device being not received by the access network device.

33. The method according to any one of claims 24 to 32, comprising:
in response to a failure to resume the signaling procedure associated with the first information, performing, by the terminal device, one of following operations:
releasing the signaling procedure associated with the first information; and
starting a second timer, the second timer being used to determine a time for the terminal device to retransmit the first request.

34. A wireless communication method, comprising:
receiving, by an access network device, a first request transmitted by a terminal device, the first request being used to request resuming a signaling procedure associated with first information,
wherein the first information is transmitted via a first link and a second link,
wherein suspending of the signaling procedure associated with the first information is triggered based on unavailability of the first link, or suspending of the signaling procedure associated with the first information is triggered based on unavailability of the second link.

35. The method according to claim 34, wherein receiving, by the access network device, the first request transmitted by the terminal device comprises:
receiving, by the access network device, the first request transmitted by the terminal device within an available time of the first link.

36. The method according to claim 35, wherein the available time of the first link is determined based on one or more of:
a first timer; or
ephemeris information of a satellite where the access network device is located.

37. The method according to any one of claims 34 to 36, wherein the first request comprises one or more of:
an identifier of the terminal device;
mobility information of the terminal device;
information for indicating to resume the signaling procedure associated with the first information; or
an association identifier of the first information,
wherein the association identifier is used to associate the first information transmitted via the first link with the first information transmitted via the second link, and/or
the association identifier is used to associate the first information with other information, the other information being information transmitted in the signaling procedure associated with the first information, other than the first information.

38. The method according to any one of claims 34 to 37, further comprising:
transmitting, by the access network device, a response message to the terminal device for the first request, the response message for the first request being used to indicate that the signaling procedure associated with the first information is successfully resumed.

39. The method according to claim 38, wherein the response message for the first request carries the first information.

40. The method according to any one of claims 34 to 37, further comprising:
transmitting, by the access network device, a response message to the terminal device for the first request, the response message for the first request being used to indicate that the signaling procedure associated with the first information fails to be resumed.

41. The method according to claim 40, wherein the response message for the first request comprises one or more of:
an identifier of the terminal device;
information for indicating a failure to resume the signaling procedure associated with the first information;
information for indicating a reason for a failure to resume the signaling procedure associated with the first information;
information for indicating an available time of the first link after a failure to resume the signaling procedure;
information for indicating an available time of the second link after a failure to resume the signaling procedure;
a second timer, the second timer being used to determine a time for the terminal device to retransmit the first request; or
an association identifier of the first information,
wherein the association identifier is used to associate the first information transmitted via the first link with the first information transmitted via the second link, and/or
the association identifier is used to associate the first information with other information, the other information being information transmitted in the signaling procedure associated with the first information, other than the first information.

42. The method according to claim 41, wherein in a case where the response message for the first request comprises the information for indicating the reason for the failure to resume the signaling procedure associated with the first information, the reason for the failure to resume the signaling procedure associated with the first information comprises one or more of:
the first information being not stored in the access network device; or
the first information transmitted by a core network device being not received by the access network device.

43. A wireless communication method, comprising:
in response to a first link being available, transmitting, by an access network device, a paging message, the paging message being used to page a terminal device that receives first information,
wherein the first information is transmitted via the first link and a second link, the first link being a link for communications between the access network device and the terminal device, and the second link being a link for communications between the access network device and a core network device.

44. The method according to claim 43, wherein the paging message comprises one or more of:
the first information;
an identifier of the terminal device;
information for indicating to resume a signaling procedure associated with the first information; or
an association identifier of the first information, the association identifier being used to associate the first information transmitted via the first link with the first information transmitted via the second link.

45. The method according to claim 43 or 44, further comprising:
in response to transmitting the paging message, receiving, by the access network device, a first request transmitted by the terminal device, the first request being used to request resuming the signaling procedure associated with the first information.

46. A wireless communication method, comprising:
in response to a first link being available, receiving, by a terminal device, a paging message transmitted by an access network device, the paging message being used to page the terminal device to receive first information,
wherein the first information is transmitted via the first link and a second link,
wherein the first link is a link for communications between the access network device and the terminal device, and the second link is a link for communications between the access network device and a core network device.

47. The method according to claim 46, wherein the paging message comprises one or more of:
the first information;
an identifier of the terminal device;
information for indicating to resume a signaling procedure associated with the first information; or
an association identifier of the first information,
wherein the association identifier is used to associate the first information transmitted via the first link with the first information transmitted via the second link, and/or
the association identifier is used to associate the first information with other information, the other information being information transmitted in the signaling procedure associated with the first information, other than the first information.

48. The method according to claim 46 or 47, further comprising:
in response to the paging message, transmitting, by the terminal device, a first request to the access network device, the first request being used to request resuming a signaling procedure associated with the first information.

49. A wireless communication method, comprising:
releasing, by an access network device, a suspended signaling procedure, wherein the signaling procedure is associated with first information, and the first information is transmitted via a first link and a second link, the first link being for communications between the access network device and a terminal device, and the second link being for communications between the access network device and a core network device;
wherein suspending of the signaling procedure is triggered based on unavailability of the first link or triggered based on unavailability of the second link.

50. The method according to claim 49, wherein releasing, by the access network device, the suspended signaling procedure comprises:
in response to a first event, releasing, by the access network device, the suspended signaling procedure,
wherein the first event comprises one or more of:
a first timer expiring, the first timer being used to determine a suspending time of the signaling procedure;
receiving first indication information transmitted by the terminal device, the first indication information being used to indicate to release the signaling procedure; or
receiving second indication information transmitted by the core network device, the second indication information being used to indicate to release the signaling procedure.

51. The method according to claim 49 or 50, further comprising:
transmitting, by the access network device, third indication information to the core network device, the third indication information being used to indicate a release of the signaling procedure by the access network device.

52. The method according to claim 51, wherein the third indication information comprises one or more of:
an identifier of the terminal device;
information for indicating the release of the signaling procedure; or
an association identifier of the first information,
wherein the association identifier is used to associate the first information transmitted via the first link with the first information transmitted via the second link, and/or
the association identifier is used to associate the first information with other information, the other information being information transmitted in the signaling procedure associated with the first information, other than the first information.

53. The method according to any one of claims 49 to 52, further comprising:
transmitting, by the access network device, fourth indication information to the terminal device, the fourth indication information being used to indicate a release of the signaling procedure by the access network device.

54. The method according to claim 53, wherein the fourth indication information comprises one or more of:
an identifier of the terminal device;
information for indicating the release of the signaling procedure; or
an association identifier of the first information,
wherein the association identifier is used to associate the first information transmitted via the first link with the first information transmitted via the second link, and/or
the association identifier is used to associate the first information with other information, the other information being information transmitted in the signaling procedure associated with the first information, other than the first information.

55. The method according to any one of claims 49 to 54, wherein releasing, by the access network device, the suspended signaling procedure comprises:
deleting, by the access network device, information associated with the signaling procedure; and/or
releasing, by the access network device, transmission resources for the signaling procedure.

56. A wireless communication method, comprising:
releasing, by a terminal device, a suspended signaling procedure, wherein the signaling procedure is associated with first information, and the first information is transmitted via a first link and a second link, the first link being for communications between an access network device and the terminal device, the second link being for communications between the access network device and a core network device;
wherein suspending of the signaling procedure is triggered based on unavailability of the first link or triggered based on unavailability of the second link.

57. The method according to claim 56, wherein releasing, by the terminal device, the suspended signaling procedure comprises:
in response to a first event, releasing, by the terminal device, the suspended signaling procedure, wherein the first event comprises a first timer expiring, the first timer being used to determine a suspending time of the signaling procedure.

58. The method according to claim 56, further comprising:
receiving, by the terminal device, fourth indication information transmitted by the access network device, the fourth indication information being used to indicate a release of the signaling procedure by the access network device.

59. The method according to claim 58, wherein the fourth indication information comprises one or more of:
an identifier of the terminal device;
information for indicating the release of the signaling procedure; or
an association identifier of the first information,
wherein the association identifier is used to associate the first information transmitted via the first link with the first information transmitted via the second link, and/or
the association identifier is used to associate the first information with other information, the other information being information transmitted in the signaling procedure associated with the first information, other than the first information.

60. The method according to claim 58 or 59, wherein releasing, by the terminal device, the suspended signaling procedure comprises:
in response to the fourth indication information, releasing, by the terminal device, the signaling procedure.

61. The method according to any one of claims 56 to 60, wherein releasing, by the terminal device, the suspended signaling procedure comprises:
deleting, by terminal device, information associated with the signaling procedure; and/or
releasing, by the terminal device, transmission resources for the signaling procedure.

62. A wireless communication method, comprising:
releasing, by a core network device, a suspended signaling procedure, wherein the signaling procedure is associated with first information, and the first information is transmitted via a first link and a second link, the first link being for communications between an access network device and a terminal device, and the second link being for communications between the access network device and the core network device;
wherein suspending of the signaling procedure is triggered based on unavailability of the first link or triggered based on unavailability of the second link.

63. The method according to claim 62, wherein releasing, by the core network device, the suspended signaling procedure comprises:
in response to a first event, releasing, by the core network device, the suspended signaling procedure, wherein the first event comprises a first timer expiring, the first timer being used to determine a suspending time of the signaling procedure.

64. The method according to claim 62, further comprising:
receiving, by the core network device, third indication information transmitted by the access network device, the third indication information being used to indicate a release of the signaling procedure by the access network device.

65. The method according to claim 64, wherein the third indication information comprises one or more of:
an identifier of the terminal device;
information for indicating the release of the signaling procedure; or
an association identifier of the first information,
wherein the association identifier is used to associate the first information transmitted via the first link with the first information transmitted via the second link, and/or
the association identifier is used to associate the first information with other information, the other information being information transmitted in the signaling procedure associated with the first information, other than the first information.

66. The method according to claim 64 or 65, wherein releasing, by the core network device, the suspended signaling procedure comprises:
in response to the third indication information, releasing, by the core network device, the signaling procedure.

67. The method according to any one of claims 62 to 66, wherein releasing, by the core network device, the suspended signaling procedure comprises:
deleting, by the core network device, information associated with the signaling procedure; and/or
releasing, by the core network device, transmission resources for the signaling procedure.

68. A wireless communication method, comprising:
transmitting, by an access network device, fourth information to a target device, the fourth information being associated with first information, and the first information being transmitted via a first link and a second link,
wherein the target device comprises a terminal device and/or a core network device.

69. The method according to claim 68, wherein the target device is the terminal device, and the fourth information comprises one or more of:
an identifier of the terminal device;
area information where the first link is available;
information for indicating an available time of the first link;
information for indicating an available time of the second link;
a time for indicating the terminal device to re-establish a connection with the access network device; or
information for indicating that the access network device is in a store-and-forward mode.

70. The method according to claim 68, wherein the target device is the core network device, and the fourth information comprises one or more of:
an identifier of the terminal device; or
information for indicating that the access network device is in a store-and-forward mode.

71. A wireless communication method, comprising:
receiving, by a target device, fourth information transmitted by an access network device, the fourth information being associated with first information, and the first information being transmitted via a first link and a second link,
wherein the target device comprises a terminal device and/or a core network device.

72. The method according to claim 71, wherein the target device is the terminal device, and the fourth information comprises one or more of:
an identifier of the terminal device;
area information where the first link is available;
information for indicating an available time of the first link;
information for indicating an available time of the second link;
a time for indicating the terminal device to re-establish a connection with the access network device; or
information for indicating that the access network device is in a store-and-forward mode.

73. The method according to claim 71, wherein the target device is the core network device, and the fourth information comprises one or more of:
an identifier of the terminal device; or
information for indicating that the access network device is in a store-and-forward mode.

74. An access network device, comprising:
a transmitting unit, configured to transmit an association identifier of first information to a target device,
wherein the association identifier is used to associate the first information transmitted via a first link with the first information transmitted via a second link, and/or
the association identifier is used to associate the first information with other information, the other information being information transmitted in a signaling procedure associated with the first information, other than the first information;
wherein the target device comprises a terminal device and/or a core network device.

75. The access network device according to claim 74, wherein the transmitting unit is configured to:
in response to receiving the first information transmitted by the target device, transmit a response message to the target device for the first information, the response message for the first information carrying the association identifier of the first information.

76. The access network device according to claim 75, wherein the target device is the terminal device, and the response message for the first information comprises one or more of:
an identifier of the terminal device;
area information where the first link is available;
information for indicating an acknowledgment of a reception of the first information;
information for indicating an availability time of the first link;
information for indicating an availability time of the second link;
a time for indicating the terminal device to re-establish a connection with the access network device; or
information for indicating that the access network device is in a store-and-forward mode.

77. The access network device according to any one of claims 74 to 76, wherein the target device is the terminal device, and the access network device further comprises:
a first receiving unit, configured to receive second information transmitted by the terminal device, the second information comprising one or more of:
mobility information of the terminal device;
a time when the terminal device is in an area where the first link is available;
a time by which the terminal device expects the signaling procedure associated with the first information to be completed; or
a time when the terminal device re-accesses the access network device after disconnecting from the access network device.

78. The access network device according to claim 77, wherein the time when the terminal device is in the area where the first link is available comprises: a time when the terminal device re-enters the area after leaving the area; and/or
a duration during which the terminal device is located in the area.

79. The access network device according to any one of claims 74 to 78, wherein the target device is the terminal device, and the transmitting unit is configured to:
transmit the first information to the core network device via the second link, in a case where the second link is available.

80. The access network device according to claim 79, wherein the target device is the core network device, and the response message for the first information comprises one or more of:
an identifier of the terminal device;
information for indicating an acknowledgement of a reception of the first information; or
information for indicating that the access network device is in a store-and-forward mode.

81. The access network device according to any one of claims 74, 75, and 80, wherein the target device is the core network device, and the access network device further comprises:
a second receiving unit, configured to receive third information transmitted by the core network device, the third information comprising an identifier of the terminal device, and/or an availability time of the second link.

82. The access network device according to claim 81, wherein in a case where the third information comprises the availability time of the second link, the availability time of the second link comprises a time, subsequent to transmitting the third information, when a connection of the second link is resumed after being disconnected.

83. The access network device according to any one of claims 74, 75, and 80 to 82, wherein the target device is the core network device, and the transmitting unit is configured to:
transmit the first information to the terminal device via the first link, in a case where the first link is available.

84. The access network device according to any one of claims 74 to 83, wherein the access network device further comprises:
a processing unit, configured to: in response to receiving the first information, perform one or more of:
storing the first information;
storing context information of the terminal device; or
suspending the signaling procedure associated with the first information.

85. The access network device according to any one of claims 74 to 84, wherein the first link is a service link for communications between the access network device and the terminal device, and/or
the second link is a feeder link for communications between the access network device and the core network device.

86. A communication device, wherein the communication device is a target device and comprises:
a receiving unit, configured to receive an association identifier of first information transmitted by an access network device,
wherein the association identifier is used to associate the first information transmitted via a first link with the first information transmitted via a second link, and/or
the association identifier is used to associate the first information with other information, the other information being information transmitted in a signaling procedure associated with the first information, other than the first information;
wherein the target device comprises a terminal device and/or a core network device.

87. The communication device according to claim 86, comprising:
a first transmitting unit, configured to transmit the first information to the access network device;
wherein the receiving unit is configured to: in response to transmitting the first information, receive a response message transmitted by the access network device for the first information, the response message for the first information carrying the association identifier of the first information.

88. The communication device according to claim 87, wherein the target device is the terminal device, and the response message for the first information comprises one or more of:
an identifier of the terminal device;
area information where the first link is available;
information for indicating an acknowledgment of a reception of the first information;
information for indicating an available time of the first link;
information for indicating an available time of the second link;
a time for indicating the terminal device to re-establish a connection with the access network device; or
information for indicating that the access network device is in a store-and-forward mode.

89. The communication device according to any one of claims 86 to 88, wherein the target device is the terminal device, and the communication device further comprises:
a second transmitting unit, configured to transmit second information to the access network device, the second information comprising one or more of:
mobility information of the terminal device;
a time when the terminal device is in an area where the first link is available;
a time by which the terminal device expects the signaling procedure associated with the first information to be completed; or
a time when the terminal device re-accesses the access network device after disconnecting from the access network device.

90. The communication device according to claim 89, wherein the time when the terminal device is in the area where the first link is available comprises: a time when the terminal device re-enters the area after leaving the area; and/or
a duration during which the terminal device is located in the area.

91. The communication device according to any one of claims 86 to 90, wherein the target device is the terminal device, and the communication device further comprises:
a processing unit, configured to: suspend the signaling procedure associated with the first information, in response to receiving the response message for the first information.

92. The communication device according to claim 87, wherein the target device is the core network device, and the response message for the first information comprises one or more of:
an identifier of the terminal device;
information for indicating an acknowledgment of a reception of the first information; or
information for indicating that the access network device is in a store-and-forward mode.

93. The communication device according to any one of claims 86, 87, and 92, wherein the target device is the core network device, and the communication device further comprises:
a third transmitting unit, configured to: transmit third information to the access network device, the third information comprising an identifier of the terminal device, and/or an available time of the second link.

94. The communication device according to claim 93, wherein the available time of the second link comprises a time when a connection of the second link for transmitting the third information is resumed after being disconnected.

95. The communication device according to any one of claims 86, 87, and 92 to 94, wherein the target device is the core network device, and the communication device further comprises:
a second processing unit, configured to: suspend the signaling procedure associated with the first information, in response to receiving a response message for the first information.

96. The communication device according to any one of claims 86 to 95, wherein the first link is a service link for communications between the access network device and the terminal device, and/or
the second link is a feeder link for communications between the access network device and the core network device.

97. A terminal device, comprising:
a transmitting unit, configured to transmit a first request to an access network device, the first request being used to request resuming a signaling procedure associated with first information,
wherein the first information is transmitted via a first link and a second link,
wherein suspending of the signaling procedure associated with the first information is triggered based on unavailability of the first link, or suspending of the signaling procedure associated with the first information is triggered based on unavailability of the second link.

98. The terminal device according to claim 97, wherein the transmitting unit is configured to:
transmit the first request to the access network device within an available time of the first link.

99. The terminal device according to claim 98, wherein the available time of the first link is determined based on one or more of:
a first timer; or
ephemeris information of a satellite where the access network device is located.

100. The terminal device according to any one of claims 97 to 99, wherein the first request comprises one or more of:
an identifier of the terminal device;
mobility information of the terminal device;
information for indicating to resume the signaling procedure associated with the first information; or
an association identifier of the first information,
wherein the association identifier is used to associate the first information transmitted via the first link with the first information transmitted via the second link, and/or
the association identifier is used to associate the first information with other information, the other information being information transmitted in the signaling procedure associated with the first information, other than the first information.

101. The terminal device according to any one of claims 97 to 100, further comprising:
a first receiving unit, configured to receive a response message transmitted by the access network device for the first request, the response message for the first request being used to indicate that the signaling procedure associated with the first information is successfully resumed.

102. The terminal device according to claim 101, wherein the response message for the first request carries the first information.

103. The terminal device according to any one of claims 97 to 100, further comprising:
a second receiving unit, configured to receive a response message transmitted by the access network device for the first request, the response message for the first request being used to indicate that the signaling procedure associated with the first information fails to be resumed.

104. The terminal device according to claim 103, wherein the response message for the first request comprises one or more of:
an identifier of the terminal device;
information for indicating a failure to resume the signaling procedure associated with the first information;
information for indicating a reason for a failure to resume the signaling procedure associated with the first information;
information for indicating an available time of the first link after a failure to resume the signaling procedure;
information for indicating an available time of the second link after a failure to resume the signaling procedure;
a second timer, the second timer being used to determine a time for the terminal device to retransmit the first request; or
an association identifier of the first information,
wherein the association identifier is used to associate the first information transmitted via the first link with the first information transmitted via the second link, and/or
the association identifier is used to associate the first information with other information, the other information being information transmitted in the signaling procedure associated with the first information, other than the first information.

105. The terminal device according to claim 104, wherein in a case where the response message for the first request comprises the information for indicating the reason for the failure to resume the signaling procedure associated with the first information, the reason for the failure to resume the signaling procedure associated with the first information comprises one or more of:
the first information being not stored in the access network device; or
the first information transmitted by a core network device being not received by the access network device.

106. The terminal device according to any one of claims 97 to 105, comprising:
a processing unit, configured to: in response to a failure to resume the signaling procedure associated with the first information, perform one of following operations:
releasing the signaling procedure associated with the first information; and
starting a second timer, the second timer being used to determine a time for the terminal device to retransmit the first request.

107. An access network device, comprising:
a receiving unit, configured to receive a first request transmitted by a terminal device, the first request being used to request resuming a signaling procedure associated with first information,
wherein the first information is transmitted via a first link and a second link,
wherein suspending of the signaling procedure associated with the first information is triggered based on unavailability of the first link, or suspending of the signaling procedure associated with the first information is triggered based on unavailability of the second link.

108. The access network device according to claim 107, wherein the receiving unit is configured to:
receive the first request transmitted by the terminal device within an available time of the first link.

109. The access network device according to claim 108, wherein the available time of the first link is determined based on one or more of:
a first timer; or
ephemeris information of a satellite where the access network device is located.

110. The access network device according to any one of claims 107 to 109, wherein the first request comprises one or more of:
an identifier of the terminal device;
mobility information of the terminal device;
information for indicating to resume the signaling procedure associated with the first information; or
an association identifier of the first information,
wherein the association identifier is used to associate the first information transmitted via the first link with the first information transmitted via the second link, and/or
the association identifier is used to associate the first information with other information, the other information being information transmitted in the signaling procedure associated with the first information, other than the first information.

111. The access network device according to any one of claims 107 to 110, further comprising:
a first transmitting unit, configured to transmit a response message to the terminal device for the first request, the response message for the first request being used to indicate that the signaling procedure associated with the first information is successfully resumed.

112. The access network device according to claim 111, wherein the response message for the first request carries the first information.

113. The access network device according to any one of claims 107 to 110, further comprising:
a second transmitting unit, configured to transmit a response message to the terminal device for the first request, the response message for the first request being used to indicate that the signaling procedure associated with the first information fails to be resumed.

114. The access network device according to claim 113, wherein the response message for the first request comprises one or more of:
an identifier of the terminal device;
information for indicating a failure to resume the signaling procedure associated with the first information;
information for indicating a reason for a failure to resume the signaling procedure associated with the first information;
information for indicating an available time of the first link after a failure to resume the signaling procedure;
information for indicating an available time of the second link after a failure to resume the signaling procedure;
a second timer, the second timer being used to determine a time for the terminal device to retransmit the first request; or
an association identifier of the first information,
wherein the association identifier is used to associate the first information transmitted via the first link with the first information transmitted via the second link, and/or
the association identifier is used to associate the first information with other information, the other information being information transmitted in the signaling procedure associated with the first information, other than the first information.

115. The access network device according to claim 114, wherein in a case where the response message for the first request comprises the information for indicating the reason for the failure to resume the signaling procedure associated with the first information, the reason for the failure to resume the signaling procedure associated with the first information comprises one or more of:
the first information being not stored in the access network device; or
the first information transmitted by a core network device being not received by the access network device.

116. An access network device, comprising:
a transmitting unit, configured to: transmit a paging message in response to a first link being available, the paging message being used to page a terminal device that receives first information,
wherein the first information is transmitted via the first link and a second link, the first link being for communications between an access network device and the terminal device, and the second link being for communications between the access network device and a core network device.

117. The access network device according to claim 116, wherein the paging message comprises one or more of:
the first information;
an identifier of the terminal device;
information for indicating to resume a signaling procedure associated with the first information; or
an association identifier of the first information, the association identifier being used to associate the first information transmitted via the first link with the first information transmitted via the second link, and/or
the association identifier is used to associate the first information with other information, the other information being information transmitted in the signaling procedure associated with the first information, other than the first information.

118. The access network device according to claim 116 or 117, further comprising:
a receiving unit, configured to: receive a first request transmitted by the terminal device in response to transmitting the paging message, the first request being used to request resuming a signaling procedure associated with the first information.

119. A terminal device, comprising:
a receiving unit, configured to: receive a paging message transmitted by an access network device in response to a first link being available, the paging message being used to page the terminal device to receive first information,
wherein the first information is transmitted via the first link and a second link,
wherein the first link is for communications between the access network device and the terminal device, and the second link is for communications between the access network device and a core network device.

120. The terminal device according to claim 119, wherein the paging message comprises one or more of:
the first information;
an identifier of the terminal device;
information for indicating to resume a signaling procedure associated with the first information; or
an association identifier of the first information,
wherein the association identifier is used to associate the first information transmitted via the first link with the first information transmitted via the second link, and/or
the association identifier is used to associate the first information with other information, the other information being information transmitted in the signaling procedure associated with the first information, other than the first information.

121. The terminal device according to claim 119 or 120, further comprising:
a transmitting unit, configured to: transmit a first request to the access network device in response to the paging message, the first request being used to request resuming a signaling procedure associated with the first information.

122. An access network device, comprising:
a processing unit, configured to release a suspended signaling procedure, wherein the signaling procedure is associated with first information, and the first information is transmitted via a first link and a second link, the first link being for communications between the access network device and a terminal device, and the second link being for communications between the access network device and a core network device;
wherein suspending of the signaling procedure is triggered based on unavailability of the first link or triggered based on unavailability of the second link.

123. The access network device according to claim 122, wherein the processing unit is configured to:
release the suspended signaling procedure in response to a first event,
wherein the first event comprises one or more of:
a first timer expiring, the first timer being used to determine a suspending time of the signaling procedure;
receiving first indication information transmitted by the terminal device, the first indication information being used to indicate to release the signaling procedure; or
receiving second indication information transmitted by the core network device, the second indication information being used to indicate to release the signaling procedure.

124. The access network device according to claim 122 or 123, further comprising:
a first transmitting unit, configured to transmit third indication information to the core network device, the third indication information being used to indicate a release of the signaling procedure by the access network device.

125. The access network device according to claim 124, wherein the third indication information comprises one or more of:
an identifier of the terminal device;
information for indicating the release of the signaling procedure; or
an association identifier of the first information,
wherein the association identifier is used to associate the first information transmitted via the first link with the first information transmitted via the second link, and/or
the association identifier is used to associate the first information with other information, the other information being information transmitted in the signaling procedure associated with the first information, other than the first information.

126. The access network device according to any one of claims 122 to 125, further comprising:
a second transmitting unit, configured to transmit fourth indication information to the terminal device, the fourth indication information being used to indicate a release of the signaling procedure by the access network device.

127. The access network device according to claim 126, wherein the fourth indication information comprises one or more of:
an identifier of the terminal device;
information for indicating the release of the signaling procedure; or
an association identifier of the first information,
wherein the association identifier is used to associate the first information transmitted via the first link with the first information transmitted via the second link, and/or
the association identifier is used to associate the first information with other information, the other information being information transmitted in the signaling procedure associated with the first information, other than the first information.

128. The access network device according to any one of claims 122 to 127, wherein the processing unit is configured to:
delete information associated with the signaling procedure; and/or
release transmission resources for the signaling procedure.

129. A terminal device, comprising:
a processing unit, configured to release a suspended signaling procedure, wherein the signaling procedure is associated with first information, and the first information is transmitted via a first link and a second link, the first link being for communications between an access network device and the terminal device, the second link being for communications between the access network device and a core network device;
wherein suspending of the signaling procedure is triggered based on unavailability of the first link or triggered based on unavailability of the second link.

130. The terminal device according to claim 129, wherein the processing unit is configured to:
release the suspended signaling procedure in response to a first event, wherein the first event comprises a first timer expiring, the first timer being used to determine a suspending time of the signaling procedure.

131. The terminal device according to claim 129, further comprising:
a first receiving unit, configured to receive fourth indication information transmitted by the access network device, the fourth indication information being used to indicate a release of the signaling procedure by the access network device.

132. The terminal device according to claim 131, wherein the fourth indication information comprises one or more of:
an identifier of the terminal device;
information for indicating the release of the signaling procedure; or
an association identifier of the first information,
wherein the association identifier is used to associate the first information transmitted via the first link with the first information transmitted via the second link, and/or
the association identifier is used to associate the first information with other information, the other information being information transmitted in the signaling procedure associated with the first information, other than the first information.

133. The terminal device according to claim 131 or 132, wherein the processing unit is configured to:
release the signaling procedure in response to the fourth indication information.

134. The terminal device according to any one of claims 129 to 133, wherein the processing unit is configured to:
delete information associated with the signaling procedure; and/or
release transmission resources for the signaling procedure.

135. A core network device, comprising:
a processing unit, configured to release a suspended signaling procedure, wherein the signaling procedure is associated with first information, and the first information is transmitted via a first link and a second link, the first link being for communications between an access network device and a terminal device, and the second link being for communications between the access network device and the core network device;
wherein suspending of the signaling procedure is triggered based on unavailability of the first link or triggered based on unavailability of the second link.

136. The core network device according to claim 135, wherein the processing unit is configured to:
release the suspended signaling procedure in response to a first event, wherein the first event comprises a first timer expiring, the first timer being used to determine a suspending time of the signaling procedure.

137. The core network device according to claim 135, further comprising:
a first receiving unit, configured to receive third indication information transmitted by the access network device, the third indication information being used to indicate a release of the signaling procedure by the access network device.

138. The core network device according to claim 137, wherein the third indication information comprises one or more of:
an identifier of the terminal device;
information for indicating the release of the signaling procedure; or
an association identifier of the first information,
wherein the association identifier is used to associate the first information transmitted via the first link with the first information transmitted via the second link, and/or
the association identifier is used to associate the first information with other information, the other information being information transmitted in the signaling procedure associated with the first information, other than the first information.

139. The core network device according to claim 137 or 138, wherein the processing unit is configured to: release the signaling procedure in response to the third indication information.

140. The core network device according to any one of claims 135 to 139, wherein the processing unit is configured to:
delete information associated with the signaling procedure; and/or
release transmission resources for the signaling procedure.

141. An access network device, comprising:
a transmitting unit, configured to transmit fourth information to a target device, the fourth information being associated with first information, and the first information being transmitted via a first link and a second link,
wherein the target device comprises a terminal device and/or a core network device.

142. The access network device according to claim 141, wherein the target device is the terminal device, and the fourth information comprises one or more of:
an identifier of the terminal device;
area information where the first link is available;
information for indicating an available time of the first link;
information for indicating an available time of the second link;
a time for indicating the terminal device to re-establish a connection with the access network device; or
information for indicating that the access network device is in a store-and-forward mode.

143. The access network device according to claim 141, wherein the target device is the core network device, and the fourth information comprises one or more of:
an identifier of the terminal device; or
information for indicating that the access network device is in a store-and-forward mode.

144. A communication device, wherein the communication device is a target device and comprises:
a receiving unit, configured to receive fourth information transmitted by an access network device, the fourth information being associated with first information, and the first information being transmitted via a first link and a second link,
wherein the target device comprises a terminal device and/or a core network device.

145. The communication device according to claim 144, wherein the target device is the terminal device, and the fourth information comprises one or more of:
an identifier of the terminal device;
area information where the first link is available;
information for indicating an available time of the first link;
information for indicating an available time of the second link;
a time for indicating the terminal device to re-establish a connection with the access network device; or
information for indicating that the access network device is in a store-and-forward mode.

146. The communication device according to claim 144, wherein the target device is the core network device, and the fourth information comprises one or more of:
an identifier of the terminal device; or
information for indicating that the access network device is in a store-and-forward mode.

147. A terminal device, comprising: a transceiver, a memory and a processor, wherein the memory is configured to store a program, the processor is configured to invoke the program in the memory and control the transceiver to receive or transmit signals, to enable the terminal device to perform the method according to any one of claims 24 to 33, 46 to 48 and 56 to 61.

148. A communication device, comprising: a transceiver, a memory and a processor, wherein the memory is configured to store a program, the processor is configured to invoke the program in the memory and control the transceiver to receive or transmit signals, to enable the communication device to perform the method according to any one of claims 13 to 23 and 71 to 73.

149. An access network device, comprising: a transceiver, a memory and a processor, wherein the memory is configured to store a program, the processor is configured to invoke the program in the memory and control the transceiver to receive or transmit signals, to enable the network device to perform the method according to any one of claims 1 to 12, 43 to 42, 43 to 45, 49 to 55 and 68 to 70.

150. A core network device, comprising: a transceiver, a memory and a processor, wherein the memory is configured to store a program, the processor is configured to invoke the program in the memory and control the transceiver to receive or transmit signals, to enable the network device to perform the method according to any one of claims 62 to 73.

151. An apparatus, comprising: a processor configured to invoke a program from a memory to enable the apparatus to perform the method according to any one of claims 1 to 73.

152. A chip, comprising: a processor configured to invoke a program from a memory to enable a device equipped with the chip to perform the method according to any one of claims 1 to 73.

153. A computer-readable storage medium, having stored thereon a program that enables a computer to perform the method according to any one of claims 1 to 73.

154. A computer program product, comprising: a program that enables a computer to perform the method according to any one of claims 1 to 73.

155. A computer program, enabling a computer to perform the method according to any one of claims 1 to 73.
